(19) **Europäisches Patentamt / European Patent Office / Office européen des brevets**

(11) **EP 4 617 724 A1**

(12) ## EUROPEAN PATENT APPLICATION
published in accordance with Art. 153(4) EPC

(43) Date of publication:
**17.09.2025 Bulletin 2025/38**

(21) Application number: **23888474.6**

(22) Date of filing: **23.10.2023**

(51) International Patent Classification (IPC):
**G01S 13/84** (2006.01)    **G01S 5/14** (2006.01)
**G01S 11/02** (2010.01)

(52) Cooperative Patent Classification (CPC):
**G01S 5/14; G01S 11/02; G01S 13/84**

(86) International application number:
**PCT/JP2023/038148**

(87) International publication number:
**WO 2024/101123 (16.05.2024 Gazette 2024/20)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **10.11.2022 JP 2022180573**

(71) Applicant: **Sony Semiconductor Solutions Corporation**
**Atsugi-shi, Kanagawa 243-0014 (JP)**

(72) Inventors:
• **NAKANO, Hiroaki**
  **Atsugi-shi, Kanagawa 243-0014 (JP)**
• **KISHIMOTO, Naomichi**
  **Atsugi-shi, Kanagawa 243-0014 (JP)**
• **OKAMOTO, Takuya**
  **Atsugi-shi, Kanagawa 243-0014 (JP)**

(74) Representative: **MFG Patentanwälte Meyer-Wildhagen Meggle-Freund Gerhard PartG mbB**
**Amalienstraße 62**
**80799 München (DE)**

(54) **INFORMATION PROCESSING DEVICE, INFORMATION PROCESSING METHOD, AND PROGRAM**

(57)    An information processing apparatus according to the present technology includes a determination processing unit that, on the basis of a usage status of a wireless communication band, performs parameter determination processing of determining a parameter of phase based distance measurement using the wireless communication band.

*FIG. 10*

EP 4 617 724 A1

**Description**

TECHNICAL FIELD

The present technology relates to an information processing apparatus, an information processing method, and a program, and particularly relates to a processing technology related to distance measurement by a phase based method.

BACKGROUND ART

In recent years, indoor positioning technology has attracted attention. Since radio waves from satellites do not reach indoors, there is a problem that a signal from a global navigation satellite system (GNSS) such as a global positioning system (GPS) cannot be received, and various methods have been proposed. For example, there are pedestrian dead reckoning (PDR) in which a motion and a movement amount of a user are measured by a plurality of sensors such as an acceleration sensor and a gyro sensor, a method of estimating a position by collation of geomagnetic data, a method of estimating a distance by a flight time from when light is projected to when light is received (time of flight (ToF)), and the like.
Note that the following patent documents can be cited as related conventional techniques.

CITATION LIST

PATENT DOCUMENT

Patent Document 1: Japanese Patent Application Laid-Open No. 2018-124181
Patent Document 2: Japanese Patent Application Laid-Open No. 2010-223593

SUMMARY OF THE INVENTION

PROBLEMS TO BE SOLVED BY THE INVENTION

However, for example, in the PDR method, a distance measurement error is accumulated, but there is no means for correcting the distance measurement error. Furthermore, in the method that requires data collation of geomagnetic data or the like, it is essential to create a preliminary map, and there is a large problem in terms of operation, for example, it is necessary to re-create the collation data again when the layout is changed or the map is changed. The ToF method is largely affected by shadowing (deterioration in distance measurement performance due to a human body), and there is a problem that a correct distance cannot be measured unless the environment is a good outlook environment.
In order to solve these problems, a distance measurement technique using a wireless signal has attracted more attention than before. A technology for performing distance measurement using wireless communication such as Bluetooth low energy (BLE: Bluetooth is a registered trademark), Wi-Fi (registered trademark), or long term evolution (LTE) has already been proposed. These methods do not require preliminary learning or the like, and are easily developed into an application.
However, it is desired to further improve the distance measurement accuracy in the distance measurement technique using a wireless signal. Currently, a method of using a received signal strength indicator (RSSI) is being commercialized as a solution. This is a method of determining that it is close if the signal is large and it is far if the signal is small, but it is known that the signal is susceptible to multipath (reflected wave). Furthermore, there is a problem that a large error occurs in the received signal strength depending on the angle of the antenna.
As a method for solving these problems, a phase based method has attracted attention. The phase based method is a method of calculating a distance on the basis of a phase characteristic with respect to a frequency of a signal propagation path used for communication. Specifically, in the phase based method, wireless signal communication is performed between at least two communication apparatuses while changing the frequency, and a phase characteristic with respect to the frequency of the signal propagation path is obtained. Then, a distance between the two communication apparatuses can be obtained on the basis of the phase characteristic.
Furthermore, by performing distance measurement between a target apparatus and at least three communication apparatuses, it is also possible to obtain a position of the target apparatus on the basis of trigonometry from the distance information, that is, perform positioning.
Here, unlike the distance measurement method such as the RSSI method, the phase based method requires wireless communication between two communication apparatuses in both directions while changing the frequency at the time of distance measurement, and thus the occupancy of the wireless communication band is relatively high. Therefore, in a case where there is a plurality of sets of communication apparatuses that perform distance measurement in a certain space, communication collision (radio wave interference) tends to easily occur, and as a result, there is a possibility that the distance measurement accuracy is deteriorated.

The present technology has been made in view of the above circumstances, and an object of the present technology is to reduce the possibility of occurrence of communication collision in a case of performing phase based distance measurement, and to efficiently use a finite wireless communication band.

SOLUTIONS TO PROBLEMS

An information processing apparatus according to the present technology includes a determination processing unit that, on the basis of a usage status of a wireless communication band, performs parameter determination processing of determining a parameter of phase based distance measurement using the wireless communication band.

According to the configuration described above, it is possible to determine the parameter of the phase based distance measurement according to a congestion state of the wireless communication band. For example, in a case where the wireless communication band is congested, it is possible to take measures such as increasing an execution interval of the phase characteristic measurement processing or reducing a frequency and the number of antennas to be used.

BRIEF DESCRIPTION OF DRAWINGS

Fig. 1 is a block diagram illustrating a configuration example of a positioning system including an information processing apparatus as an embodiment according to the present technology.

Fig. 2 is a block diagram illustrating an internal configuration example of the information processing apparatus as the embodiment.

Fig. 3 is a block diagram illustrating an internal configuration example of a wireless communication module included in the information processing apparatus as the embodiment.

Fig. 4 is a block diagram illustrating an internal configuration example of a communication apparatus in the embodiment.

Fig. 5 is a diagram illustrating a mode example of phase measurement in a phase based method.

Fig. 6 is an explanatory diagram of a phase of a signal propagation path measured in the phase based method.

Fig. 7 is an explanatory diagram of a phase characteristic with respect to a frequency of the signal propagation path.

Fig. 8 is an explanatory diagram of an example of a positioning method.

Fig. 9 is a diagram for explaining an example of a specific communication technique between communication devices in the phase based method.

Fig. 10 is a functional block diagram for explaining functions as the embodiment, which are provided in the information processing apparatus.

Fig. 11 is a flowchart illustrating an example of a specific processing procedure to be executed by the information processing apparatus to realize a first example of a technique.

Fig. 12 is a flowchart illustrating an example of a specific processing procedure to be executed by the information processing apparatus to realize a second example of a technique.

Fig. 13 is a diagram for explaining a configuration example of an information processing apparatus in a third example of a technique.

Fig. 14 is a flowchart illustrating an example of a specific processing procedure to be executed by the information processing apparatus to realize the third example of a technique.

Fig. 15 is a flowchart illustrating an example of a specific processing procedure to be executed by the information processing apparatus to realize a fourth example of a technique.

Fig. 16 is a flowchart illustrating an example of a specific processing procedure to be executed by the information processing apparatus to realize a fifth example of a technique.

Fig. 17 is an explanatory diagram of a parameter determination method as a sixth example of a technique.

Fig. 18 is a flowchart illustrating an example of a specific processing procedure to be executed by the information processing apparatus to realize the sixth example of a technique.

Fig. 19 is an explanatory diagram of a parameter determination method as another example in the sixth example of a technique.

Fig. 20 is an explanatory diagram of another example of the positioning system.

Fig. 21 is a functional block diagram for explaining functions of an information processing apparatus in first another example.

Fig. 22 is a functional block diagram for explaining functions of an information processing apparatus in second another example.

Fig. 23 is a diagram illustrating an example of a measurement result of an amplitude for each frequency calculated in the process of phase measurement for each frequency.

Fig. 24 is a diagram illustrating waveforms of distances calculated at a plurality of points when phase based distance measurement is performed at the plurality of points in a stationary state for a predetermined time.

Fig. 25 is a functional block diagram for explaining functions of an information processing apparatus in third another example.

Fig. 26 is a functional block diagram for explaining functions of an information processing apparatus in fourth another example.

Fig. 27 is an explanatory diagram of variations of processing sharing.

MODE FOR CARRYING OUT THE INVENTION

Hereinafter, embodiments according to the present technology will be described in the following order with reference to the accompanying drawings.

<1. Overview of positioning system of embodiment>

(1-1. Configuration example of positioning system)
(1-2. Internal configuration example of information processing apparatus)
(1-3. Internal configuration example of communication apparatus)
(1-4. Distance measurement and positioning by phase based method)

<2. Positioning technique as embodiment>

(2-1. First example of technique)
(2-2. Second example of technique)
(2-3. Third example of technique)
(2-4. Fourth example of technique)
(2-5. Fifth example of technique)
(2-6. Sixth example of technique)

<3. Another example of system configuration>
<4. Another example of usage status information generation>

(4-1. First another example)
(4-2. Second another example)
(4-3. Third another example)
(4-4. Fourth another example)

<5. Modification>
<6. Summary of embodiments>
<7. Present technology>

<1. Overview of distance measurement system of embodiment>

(1-1. Configuration example of distance measurement system)

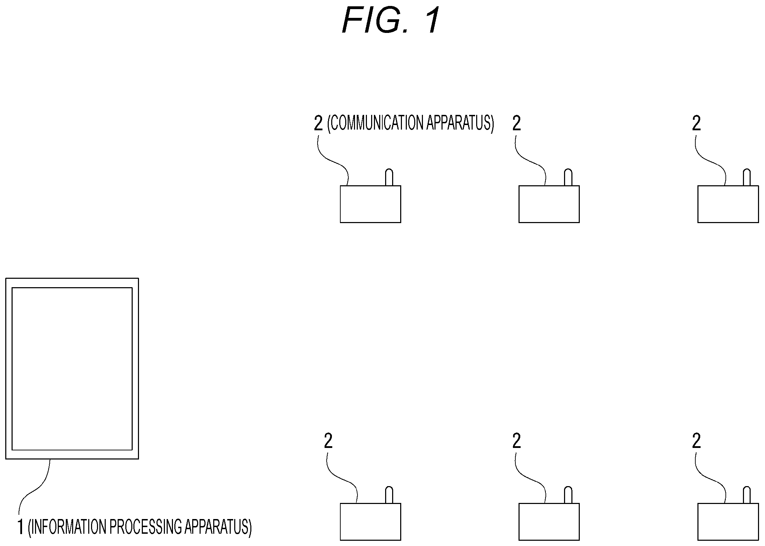

Fig. 1 is a block diagram illustrating a configuration example of a positioning system including an information processing apparatus 1 as an embodiment according to the present technology.

As illustrated in the drawing, the positioning system includes the information processing apparatus 1 and a plurality of communication apparatuses 2 capable of performing wireless communication with the information processing apparatus 1.

The information processing apparatus 1 is configured as a computer apparatus equipped with a microcomputer including a central processing unit (CPU), a read-only memory (ROM), and a random-access memory (RAM). In the present example, the information processing apparatus 1 is assumed to be a smartphone, but the information processing apparatus 1 may be another computer apparatus such as a tablet terminal or a personal computer (for example, a notebook type or the like).

In the present embodiment, wireless communication as short-range wireless communication can be performed between the information processing apparatus 1 and the communication apparatus 2. Specifically, in the present example, it is possible to perform wireless communication by a Bluetooth low energy (BLE; Bluetooth is registered trademark) method.

In this case, an apparatus functioning as a BLE beacon is used as the communication apparatus 2.

In the present embodiment, the information processing apparatus 1 performs wireless communication with a plurality of the communication apparatuses 2 by BLE, and performs distance measurement with the plurality of communication apparatuses 2 by the phase based method. Then, in the present example, the information processing apparatus 1 performs positioning processing for the self-position by using these distance measurement results.

Note that a specific technique of distance measurement by the phase based method and positioning using a distance measurement result will be described later again.

(1-2. Internal configuration example of information processing apparatus)

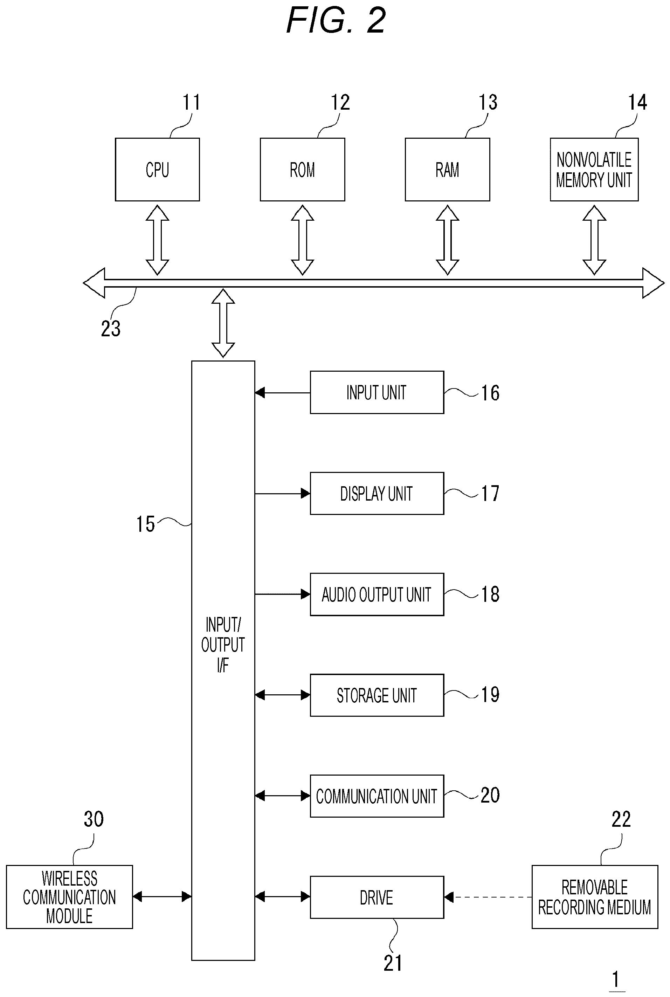

Fig. 2 is a block diagram illustrating a hardware configuration example of the information processing apparatus 1.

As illustrated in the drawing, the information processing apparatus 1 includes a CPU 11. The CPU 11 executes various processing in accordance with a program stored in a ROM 12 or a nonvolatile memory unit 14 such as an electrically erasable programmable read-only memory (EEP-ROM) or the like, or a program loaded from a storage unit 19 to a RAM 13. Furthermore, the RAM 13 appropriately stores data and the like necessary for the CPU 11 to execute various processing.

The program here may include an application program for realizing positioning based on a result of distance measurement by the phase based method, and an application program for realizing various functions using a positioning result such as a navigation function.

The CPU 11, the ROM 12, the RAM 13, and the nonvolatile memory unit 14 are connected to one another via a bus 23. An input/output interface (I/F) 15 is also connected to the bus 23.

An input unit 16 including an operation element or an operation device is connected to the input/output interface 15. For example, as the input unit 16, various types of operation elements and operation devices such as a keyboard, a mouse, a key, a dial, a touch panel, a touch pad, and a remote controller are assumed.

An operation is detected by the input unit 16, and a signal corresponding to the detected operation is interpreted by the CPU 11.

Furthermore, a display unit 17 including a liquid crystal display (LCD), an organic electro-luminescence (EL) panel, or the like, and an audio output unit 18 including a speaker or the like are integrally or separately connected to the input/output interface 15.

The display unit 17 is used for displaying various types of information, and includes, for example, a display device provided in a housing of the information processing apparatus 1, a separate display device connected to the information processing apparatus 1, or the like.

The display unit 17 executes display of an image for various types of image processing, a moving image to be processed, or the like, on a display screen on the basis of an instruction from the CPU 11. Furthermore, the display unit 17 displays various operation menus, icons, messages, and the like, that is, performs display as a graphical user interface (GUI), on the basis of an instruction from the CPU 11.

In some cases, the storage unit 19 including a hard disk drive (HDD), a solid-state memory, or the like, and a communication unit 20 including a modem or the like are connected to the input/output interface 15.

The communication unit 20 communicates with an external device via a network line such as the Internet.

Furthermore, a drive 21 is also connected to the input/output interface 15 as necessary, and a removable recording medium 22, such as a magnetic disk, an optical disk, a magneto-optical disk, or a semiconductor memory, is mounted appropriately.

A data file such as a program used for each processing can be read from the removable recording medium 22 by the drive 21. The read data file is stored in the storage unit 19, and an image or audio included in the data file is output by the display unit 17 or the audio output unit 18. Furthermore, a computer program or the like read from the removable recording medium 22 is installed in the storage unit 19 as necessary.

Furthermore, a wireless communication module 30 is connected to the input/output interface 15.

The wireless communication module 30 is a communication module for performing short-range wireless communication with an external device. Specifically, in the present example, the wireless communication module 30 is configured to be able to perform wireless communication by BLE with the communication apparatus 2.

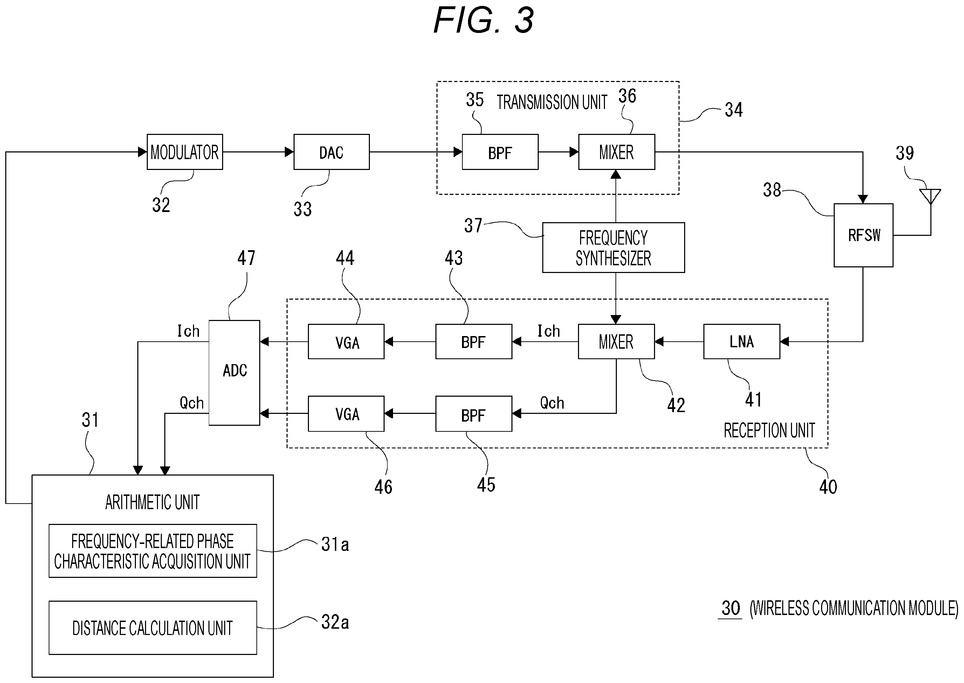

Fig. 3 is a block diagram illustrating an internal configuration example of the wireless communication module 30.

As illustrated in the drawing, the wireless communication module 30 includes an arithmetic unit 31, a modulator 32, a digital-to-analog converter (DAC) 33, a transmission unit 34, a frequency synthesizer 37, an RF switch (SW) 38, an antenna 39, a reception unit 40, and an analog-to-digital converter (ADC) 47.

As described above, the wireless communication module 30 in the present example can perform wireless communication by BLE, but in BLE, it is possible to cut as much time as possible for an operation requiring large power, such as connection establishment or data communication. Therefore, power consumption can be suppressed, and the wireless communication module 30 can be downsized.

The modulator 32 performs signal modulation processing for performing wireless communication with the communication apparatus 2. Here, as the modulation processing, for example, IQ modulation is performed. In the IQ modulation, each signal of an I channel (In-phase: in-phase component) and a Q channel (Quadrature: quadrature component) is used as a baseband signal.

The modulator 32 performs the modulation processing as the IQ modulation on data to be transmitted supplied from the arithmetic unit 31.

The DAC 33 converts the digital signal from the modulator 32 into an analog signal. The analog signal converted by the DAC 33 is supplied to the transmission unit 34.

The transmission unit 34 is a block that transmits a signal by wireless communication. As illustrated, the transmission unit 34 includes a band pass filter (BPF) 35 and a mixer 36. The BPF 35 passes only a signal of a specific frequency band. That is, the BPF 35 supplies only a signal of the specific frequency band to the mixer 36 with respect to analog signals from the DAC 33.

The mixer 36 mixes a local oscillation frequency supplied from the frequency synthesizer 37 with the signal supplied from the BPF 35 to convert the signal into a transmission frequency of wireless communication.

The frequency synthesizer 37 supplies a frequency used for transmission and reception. Specifically, the frequency synthesizer 37 includes a local oscillator therein, and is used for conversion of a high-frequency signal and a baseband signal of wireless communication.

The RF switch 38 is a switch that switches a radio frequency (RF) signal. The RF switch 38 connects the transmission unit 34 to the antenna 39 at the time of transmission, and connects the reception unit 40 to the antenna 39 at the time of reception.

The antenna 39 is an antenna for transmitting and receiving signals by wireless communication.

The reception unit 40 is a block that receives a signal by wireless communication. As illustrated, the reception unit 40 includes a low noise amplifier (LNA) 41, a mixer 42, a BPF 43, a variable gain amplifier (VGA) 44, a BPF 45, and a VGA 46.

The LNA 41 amplifies the RF signal received by the antenna 39. The mixer 42 mixes the signal supplied from the LNA 41 with the local oscillation frequency supplied from the frequency synthesizer 37 to obtain each of an I channel signal and a Q channel signal. The I channel signal (denoted as "Ich" in the drawing) is supplied to the BPF 43, and the Q channel signal (denoted as "Qch" in the drawing) is supplied to the BPF 45.

The I channel signal obtained by the mixer 42 is input to the BPF 43, and only a signal in a specific frequency band is extracted and supplied to the VGA 44. On the other hand, the Q channel signal obtained by the mixer 42 is input to the BPF 45, and only a signal in a specific frequency band is extracted and supplied to the VGA 46.

The VGA 44 and the VGA 46 function as an analog variable gain amplifier that adjusts the gain of the I channel signal supplied from the BPF 43 and an analog variable gain amplifier that adjusts the gain of the Q channel signal supplied from the BPF 45, respectively.

The ADC 47 converts the I channel signal and the Q channel signal from the reception unit 40, that is, the I channel signal and the Q channel signal output via the VGA 44 and the VGA 46 from analog signals to digital signals.

The I channel and Q channel signals converted into the digital signals are supplied to the arithmetic unit 31.

The arithmetic unit 31 includes, for example, a microcomputer including a CPU, a ROM, and a RAM, and the CPU executes various processing in accordance with a program stored in the ROM or a program loaded from the ROM into the RAM.

For example, the arithmetic unit 31 performs processing of supplying data to be transmitted to the modulator 32 and modulating the data. Furthermore, the arithmetic unit 31 also performs processing of demodulating the received data on the basis of the data of each of the I channel signal and the Q channel signal supplied from the ADC 47, or the like.

Furthermore, the arithmetic unit 31 can also perform communication error detection processing based on an error detection code such as a cyclic redundancy check (CRC) code for the reception signal input via the antenna 39.

Furthermore, the arithmetic unit 31 in the present example has functions as a frequency-related phase characteristic acquisition unit 31a and a distance calculation unit 31b illustrated in Fig. 3 as functions for performing distance measurement using wireless communication.

The frequency-related phase characteristic acquisition unit 31a acquires a phase characteristic with respect to a frequency of a signal propagation path with the communication apparatus 2. In the present example, in order to perform distance measurement by the phase based method as distance measurement using wireless communication, processing of acquiring the phase characteristic with respect to the frequency of the signal propagation path is performed.

The distance calculation unit 31b calculates a distance to the communication apparatus 2 on the basis of the phase characteristic with respect to the frequency of the signal propagation path acquired by the frequency-related phase characteristic acquisition unit 31a.

(1-3. Internal configuration example of communication apparatus)

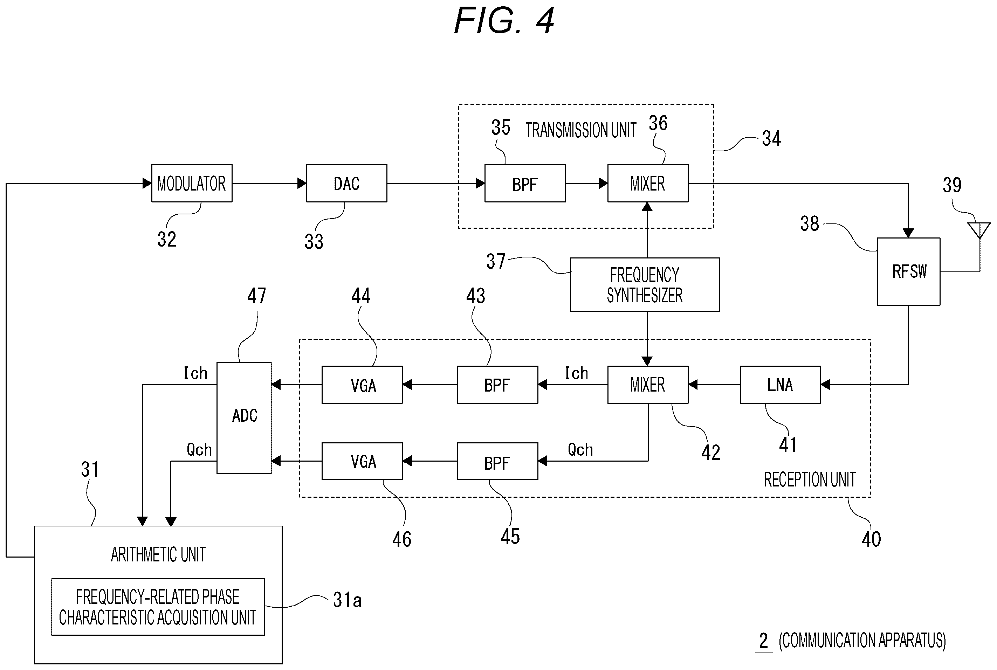

Fig. 4 is a block diagram illustrating an internal configuration example of the communication apparatus 2.
As can be seen from comparison with Fig. 3, the internal configuration of the communication apparatus 2 is similar to the internal configuration of the wireless communication module 30, and duplicate description is avoided.
Note that, in the communication apparatus 2, although the distance calculation unit 31b is not essential and is not illustrated, a configuration including the distance calculation unit 31b is also possible.

(1-4. Distance measurement and positioning by phase based method)

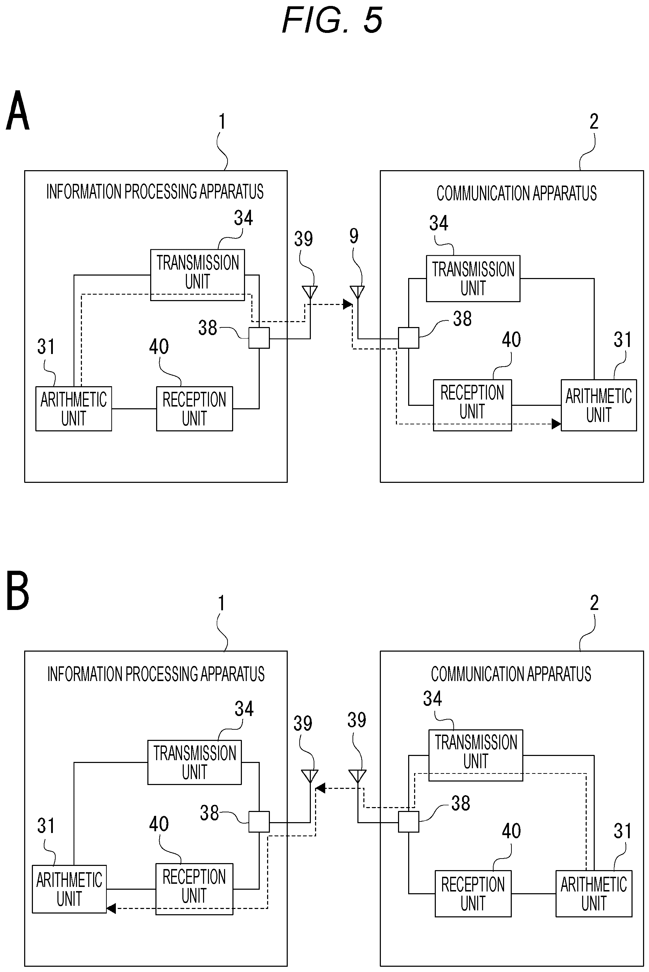

Fig. 5 is a diagram illustrating a mode example of phase measurement in the phase based method. In the phase based method, a phase is measured on the basis of a result of performing wireless communication while changing the frequency between two apparatuses having a wireless communication function, that is, between the information processing apparatus 1 (the wireless communication module 30) and the communication apparatus 2 in the present example.
At this time, first, as illustrated in Fig. 5A, a measurement signal is transmitted from the information processing apparatus 1 (initiator) to the communication apparatus 2 (reflector).
Here, the initiator means an apparatus on a side that performs distance calculation processing based on the measured phase, and the reflector means an apparatus that is paired with the initiator and exchanges the measurement signal with the initiator.
Note that Fig. 5 mainly illustrates a flow of a measurement signal related to phase measurement, and for example, the modulator 32, the DAC 33, the frequency synthesizer 37, and the ADC 47 are not illustrated.
In Fig. 5A, in the information processing apparatus 1 as the initiator, the arithmetic unit 31 transmits the measurement signal from the antenna 39 via the transmission unit 34. Furthermore, in the communication apparatus 2 as the reflector, the measurement signal is received by the reception unit 40 via the antenna 39.
Then, as illustrated in Fig. 5B, a measurement signal is returned from the communication apparatus 2 to the information processing apparatus 1. That is, in the communication apparatus 2, the arithmetic unit 31 transmits a measurement signal from the antenna 39 via the transmission unit 34, and in the information processing apparatus 1, the measurement signal is received by the reception unit 40 via the antenna 39. Thus, the phase characteristic between the information processing apparatus 1 and the communication apparatus 2 is measured in the arithmetic unit 31. By performing reciprocating communication in this manner, it is possible to appropriately measure the phase characteristic between the two apparatuses.

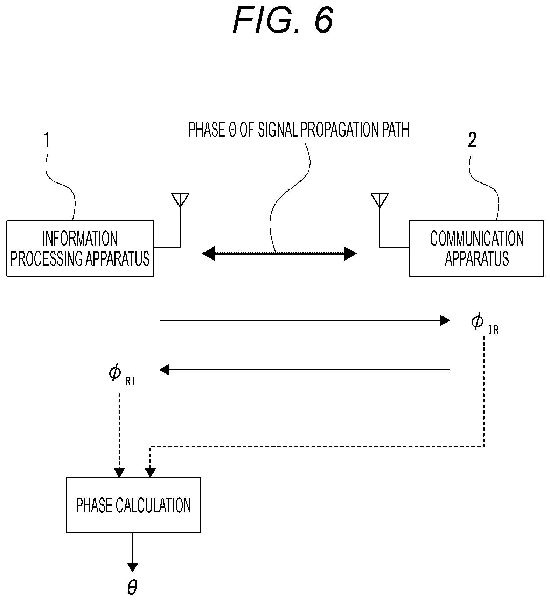

Fig. 6 is an explanatory diagram of a phase $\theta$ of the signal propagation path measured in the phase based method.
Furthermore, as illustrated in Fig. 5A, in a case where a measurement signal is transmitted from the side of the information processing apparatus 1 to the side of the communication apparatus 2, the communication apparatus 2 measures a signal phase $\varphi$ of the measurement signal. Here, the signal phase $\varphi$ measured when the measurement signal is transmitted from the side of the information processing apparatus 1 (initiator) to the side of the communication apparatus 2 (reflector) in this manner is referred to as "$\varphi_{IR}$".
Furthermore, as illustrated in Fig. 5B, in a case where a measurement signal is transmitted from the side of the communication apparatus 2 to the side of the information processing apparatus 1, the information processing apparatus 1 measures the signal phase $\varphi$ of the measurement signal. The signal phase $\varphi$ measured when the measurement signal is transmitted from the side of the communication apparatus 2 to the side of the information processing apparatus 1 in this manner is referred to as "$\varphi_{RI}$".
Here, the signal phase $\varphi$ is obtained by the following [Formula 1] when an I channel signal and a Q channel signal obtained by receiving the measurement signal are set as "I" and "Q", respectively.

$$\varphi = \tan^{-1} \times Q/I \quad \dots \quad [\text{Formula 1}]$$

Then, in the phase based method, the phase $\theta$ of the signal propagation path is obtained on the basis of the signal phase $\varphi_{IR}$ and the signal phase $\varphi_{RI}$ described above. Specifically, the phase $\theta$ is obtained by averaging the signal phase $\varphi_{IR}$ and the signal phase $\varphi_{RI}$. As the averaging calculation here, in addition to the calculation of obtaining the average value of the signal phase $\varphi_{IR}$ and the signal phase $\varphi_{RI}$, calculation as addition of the signal phase $\varphi_{IR}$ and the signal phase $\varphi_{RI}$ can also be performed.
In the phase based method, the measurement of the phase $\theta$ as described above is performed for each frequency while the frequency of the measurement signal is sequentially changed within a predetermined frequency band. In other words, the phase θ is measured for each of the plurality of frequencies. Note that, as the "predetermined frequency band" here, for example, in the case of BLE, it is conceivable to use a frequency band determined as a use band on a communication standard, such as a 2.4 GHz band (band from 2400 MHz to 2480 MHz).

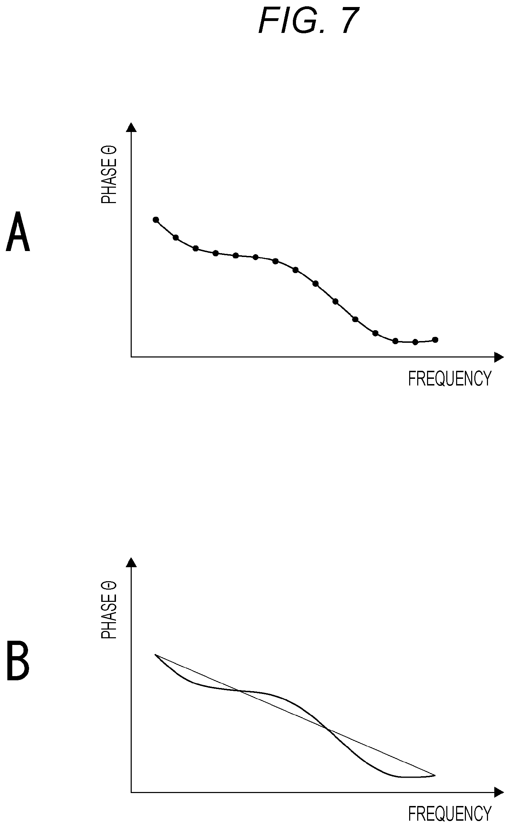

When the phase θ is measured for each frequency within a predetermined frequency band as described above, the measurement result illustrated in Fig. 7A is obtained. A black circle in the drawing indicates a measurement result of the phase θ at each frequency.

The result illustrated in Fig. 7A can be rephrased as a phase characteristic with respect to the frequency of the signal propagation path.

In the phase based method, distance measurement is performed on the basis of a change mode of the phase θ when the frequency changes. Specifically, in the characteristic of the phase θ with respect to a change in frequency, the magnitude of an inclination of the phase θ as illustrated in Fig. 7B correlates with the magnitude of a distance. At this time, the steeper the inclination of the phase θ, the greater the distance. Therefore, the distance can be calculated on the basis of the inclination of the phase θ.

A method of obtaining a group delay $\tau$ from the inclination of the phase θ and multiplying the group delay $\tau$ by the light speed (= 299792458 m/s) can be taken as an example of a specific distance calculation method. The group delay $\tau$ is used to eliminate the influence of the $2\pi$ indefiniteness of the phase. Note that the group delay $\tau$ is obtained by differentiating the phase θ with the angular frequency $\omega$.

Here, the method of calculating the distance based on the characteristic of the phase θ with respect to the frequency, that is, the phase characteristic with respect to the frequency of the signal propagation path is not limited to the above method, and various methods can be considered. For example, it is conceivable to employ a method of acquiring not only the characteristic of the phase θ with respect to the frequency but also the characteristic of the amplitude with respect to the frequency, in other words, acquiring not only the frequency characteristic of the phase θ but also the frequency characteristic of the amplitude, converting the frequency characteristic of the phase θ and the amplitude into a time response waveform by inverse Fourier transform such as inverse fast Fourier transform (IFFT), and obtaining the distance on the basis of the time response waveform.

Since the phase θ changes according to the frequency, in principle, the distance measurement by the phase based method can be performed by measuring the phase θ for at least two or more frequencies.

As described in Fig. 6, the phase based method is a method of calculating the distance by obtaining the phase θ from measurement results of the signal phases $\varphi$ in both directions from the information processing apparatus 1 to the communication apparatus 2 and from the communication apparatus 2 to the information processing apparatus 1, and this method, in other words, can be said to be a method of obtaining the distance on the basis of relative difference information of the signal phases $\varphi$. Accordingly, the phase based method has an advantage that it is possible to prevent the distance measurement accuracy from deteriorating due to the absolute value of a circuit delay of each block related to signal transmission and reception and a variation value due to the temperature characteristic.

Here, in the present specification, measuring the "phase characteristic with respect to the frequency of the signal propagation path" as illustrated in Fig. 7A is referred to as "phase characteristic measurement". Furthermore, communication processing performed between communication devices as an initiator and a reflector for the "phase characteristic measurement", that is, communication processing performed between communication devices while changing the frequency in order to measure the phase θ for each frequency is referred to as "phase characteristic measurement communication processing".

Furthermore, in the following description, the distance obtained by the phase based method is referred to as a "distance D".

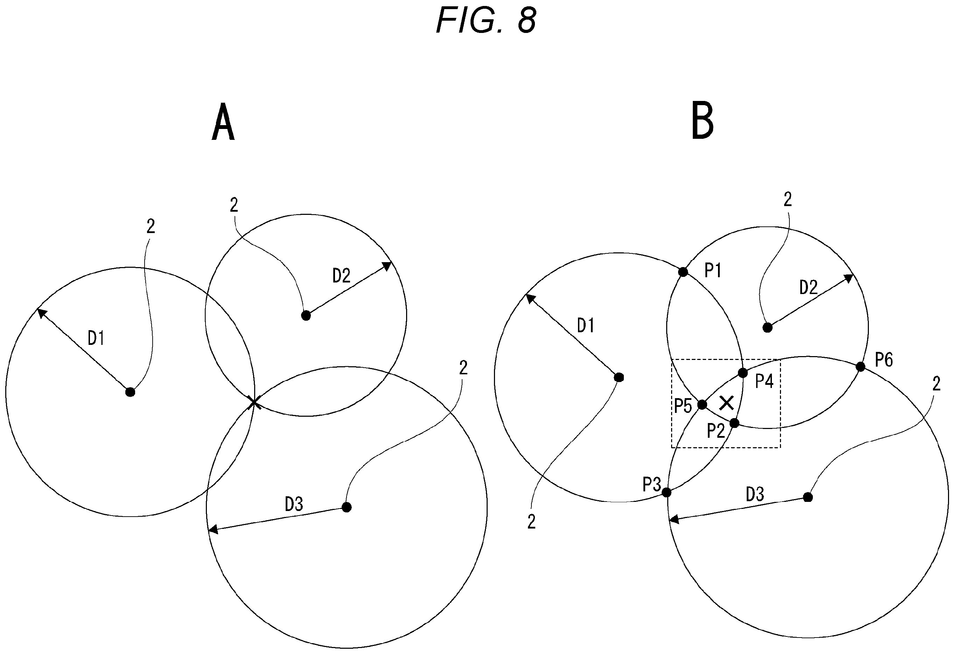

Next, positioning will be described with reference to Fig. 8.

The information processing apparatus 1 can specify the position of the information processing apparatus 1 by a triangulation method if the information processing apparatus 1 can perform distance measurement to each of at least three communication apparatuses 2 and can specify a distance D to each of the three communication apparatuses 2. Specifically, since the arrangement position of each of the communication apparatuses 2 as beacons is known, as illustrated in Fig. 8A, the position of the information processing apparatus 1 can be obtained as an intersection (a × mark in the drawing) of three circles each centered on the position of the communication apparatus 2 and having the distance D (D1 to D3 in the drawing) to the communication apparatus 2 as a radius.

However, in practice, it is rare for three circles to intersect at a single point. That is, even if circles intersect, a plurality of intersections P usually exists. Fig. 8B illustrates a state in which three circles do not intersect at a single point, and a total of six intersections P1, P2, P3, P4, P5, and P6 are generated by the three circles. In this case, the position of the positioning target apparatus (that is, the information processing apparatus 1) can be calculated on the basis of a region formed by these intersections P. Specifically, a method can be mentioned in which three points that can be selected from the six intersections P, the three points minimizing an area of the triangle formed by connecting the points, in other words, three intersections P (three points, that is, the intersections P2, P4, and P5 in the example of the drawing) that form a portion where the three circles overlap one another are specified, and the center of gravity position of the triangle formed by the three points is obtained as the position of the positioning target apparatus.

Note that a positioning calculation method for specifying the position of the positioning target apparatus by using the distance D to each of the plurality of communication apparatuses 2 is not limited to the positioning calculation method by the center of gravity method (centroid method) as described above, and various methods can be considered, and is not limited to a specific method.

<2. Positioning technique as embodiment>

As described with reference to Figs. 5 to 7, in the phase based distance measurement, since it is necessary to perform wireless communication between two communication devices while changing the frequency in both directions, the occupancy of the wireless communication band is higher than that of a distance measurement method such as a received signal strength indicator (RSSI) method.

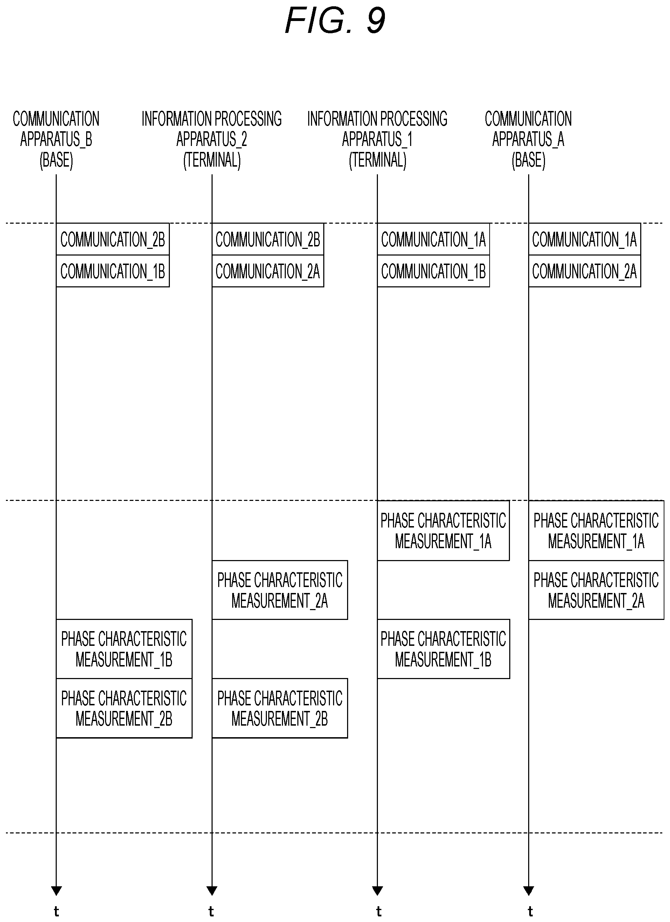

An example of a specific communication method between the communication devices in the phase based scheme will be described with reference to Fig. 9.

Fig. 9 illustrates a time chart of communication and phase measurement in the phase based method, and illustrates a case where there are two communication apparatuses 2 as bases and two information processing apparatuses 1 as terminals in the target space. Here, the two communication apparatuses 2 are referred to as "communication apparatus_A" and "communication apparatus_B", and the two information processing apparatuses 1 are referred to as "information processing apparatus_1" and "information processing apparatus_2".

Pre-communication is performed between the base and the terminal before starting phase characteristic measurement for distance measurement. In this pre-communication, information necessary for realizing timing alignment of phase characteristic measurement and the like is exchanged.

As illustrated in the drawing, in the pre-communication, first, the information processing apparatus_1 and the communication apparatus_A communicate with each other, and the information processing apparatus_2 and the communication apparatus_B communicate with each other at the same time ("communication_1A" and "communication_2B" in the drawing). This is because different frequency channels are used to enable simultaneous communication without mutual interference. Next, in the pre-communication, the information processing apparatus_1 and the communication apparatus_B, and the information processing apparatus_2 and the communication apparatus_A simultaneously communicate with each other ("communication_1B" and "communication_2A" in the drawing).

After the pre-communication, communication for phase characteristic measurement is performed between the communication devices. In the phase characteristic measurement, for example, a band having a constant width such as a band of 2400 MHz to 2480 MHz is used, and thus there is a possibility that interference occurs when a plurality of sets of communication devices performs measurement at the same time. Therefore, in the example of Fig. 9, the phase characteristic measurement is performed in a time division manner for each set of communication devices. Specifically, phase characteristic measurement is performed in a time-division manner in the order of phase characteristic measurement between the information processing apparatus_1 and the communication apparatus_A ("phase characteristic measurement_1A" in the drawing), phase characteristic measurement between the information processing apparatus_2 and the communication apparatus_A ("phase characteristic measurement_2A" in the drawing), phase characteristic measurement between the information processing apparatus_1 and the communication apparatus_B ("phase characteristic measurement_1B" in the drawing), and phase characteristic measurement between the information processing apparatus_2 and the communication apparatus_B ("phase characteristic measurement_2B" in the drawing).

Based on the above premise, an upper limit value of the number of terminals that can be simultaneously measured in the case of BLE will be considered.

[Formula 2] described below is a formula representing an example of a relationship between the wireless communication band and the number of terminals in the target space.

[Math. 1]

$$max\left(N_{term}, N_{base}, roundup\left(\frac{N_{base} \cdot N_{term}}{37}\right)\right) \cdot T_{ACL} + N_{term} \cdot N_{base} \cdot T_{pmes} \leq k \cdot T_{pos}$$

$$\ldots \text{[Formula 2]}$$

In [Formula 2], $N_{term}$ represents the number of terminals (terminal devices: the information processing apparatuses 1 in the present example), $N_{base}$ represents the number of bases (base stations: the communication apparatuses 2 in the present example), k represents a radio wave occupancy, $T_{pos}$ represents a positioning cycle, $T_{adv}$ represents an advertisement communication time per positioning cycle of one base, $T_{ACL}$ represents an access control list (ACL) communication time per positioning cycle of one terminal, and $T_{pmes}$ represents a time required for one phase characteristic measurement.

For example, it is assumed that $N_{base}$ (the number of communication apparatuses 2 disposed in the target space) = 4. Furthermore, it is assumed that radio wave occupancy = 1 and $T_{pos}$ = 1 sec (second). Moreover, it is assumed that $T_{ACL}$ = 21.16 msec and $T_{pmes}$ = 7.449 msec (in the case of the frequency channel used for the phase characteristic measurement = 80 ch) corresponding to the case of BLE.

Under this condition, according to [Formula 2], $N_{term}$ is less than or equal to "19". That is, in a certain target space, when 19 terminals attempt to execute phase characteristic measurement to implement periodic positioning with the positioning cycle $T_{pos}$ = 1 sec in the same period, a collision of communication may occur logically.

As understood from the example described above, in the phase based distance measurement, the occupancy of the wireless communication band is relatively high, and communication collision (radio interference) tends to easily occur.

Therefore, in the present embodiment, in a case where the phase based distance measurement is performed, the possibility of occurrence of communication collision is reduced, and a finite wireless communication band is efficiently used.

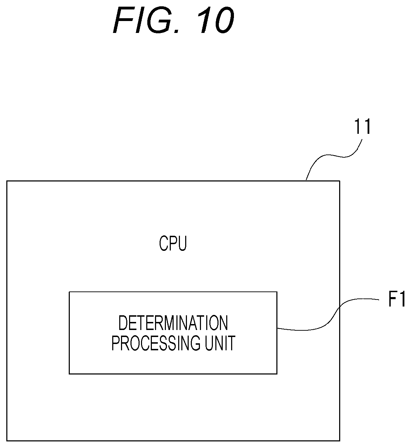

Fig. 10 is a functional block diagram for explaining functions as the embodiment of the CPU 11 in the information processing apparatus 1.

As illustrated, the CPU 11 has functions as a determination processing unit F1. The determination processing unit F1 performs parameter determination processing of determining a parameter of the phase based distance measurement using the wireless communication band on the basis of the usage status of the wireless communication band. In the present example, the parameter determination processing is performed on the basis of usage status information representing the usage status of the wireless communication band.

For example, it is conceivable that the information processing apparatus 1 performs carrier sense for the wireless communication band to acquire the usage status information. Carrier sense is generally used in the field of wireless communication, and is widely known as a function of confirming whether or not a wireless channel (frequency channel) to be transmitted is being used before starting transmission and preventing collision.

Specifically, the CPU 11 in the present example issues an instruction to the arithmetic unit 31 illustrated in Fig. 3, causes the arithmetic unit to execute carrier sense for each frequency of the wireless communication band used in the phase based distance measurement, and acquires information indicating use/non-use for each frequency obtained as a result of the carrier sense as the usage status information.

Note that the usage status information is not limited to using information indicating an execution result of the carrier sense. This point will be described again later.

Here, the parameter of the phase based distance measurement broadly means various parameters that can be adjusted in the phase based distance measurement, such as a parameter related to a temporal element such as an execution interval and a phase measurement time of the phase characteristic measurement communication processing in the phase based distance measurement, a parameter related to a frequency used in the phase based distance measurement, and a parameter related to the number of antennas used in the phase based distance measurement.

As a technique of determining the parameter, for example, six techniques from a first example of a technique to a sixth example of a technique described below can be exemplified. By these parameter determination techniques, band occupancy in a frequency domain and temporal band occupancy are reduced for a finite wireless communication band. As a result, in a case where there is a plurality of sets of communication apparatuses that perform distance measurement in the target space, the possibility of communication collision is reduced.

(2-1. First example of technique)

In the first example of a technique, processing of determining the number of frequencies for which phase measurement is performed is performed as the parameter determination processing.

Specifically, the CPU 11 in this case determines whether or not the wireless communication band is congested based on the usage status information. For example, in a case where the information of the execution result of the carrier sense is used as the usage status information as in the present example, it is conceivable that the determination is performed, for example, as a determination as to whether or not the number of frequencies in use is greater than or equal to a predetermined threshold.

Then, in a case where it is determined that the wireless communication band is not congested, the CPU 11 determines the frequency channel on which the phase measurement (measurement of the phase θ described above) is performed as all the frequency channels. That is, for example, as an example for description, assuming that there are a total of 80 available frequency channels in increments of 1 MHz from 2401 MHz to 2480 MHz, the 80 channels are determined as frequency channels for phase measurement.

On the other hand, in a case where it is determined that the wireless communication band is congested, the CPU 11 determines the frequency channel to be subjected to the phase measurement as a frequency channel obtained by excluding some frequency channels from all the frequency channels. For example, in a case where a total of 80 channels are available as in the above example, for example, it is conceivable to determine 40 channels, which is half, as frequency channels for which phase measurement is performed.

Then, the CPU 11 controls the arithmetic unit 31 to execute phase characteristic measurement and distance calculation using the determined frequency channel.

Note that, in the above, as an example for description, an example has been described in which usable frequencies exist at uniform intervals of 1 MHz. However, there is a case where there is a channel that is not permitted to be used, such as an advertising channel in BLE, and the usable frequencies are not limited to uniform intervals.

By performing parameter determination as the first example of a technique as described above, it is possible to reduce the band occupancy in the frequency domain related to distance measurement in response to a case where the wireless communication band is congested. In particular, in a case where there is a plurality of information processing apparatuses 1 that performs phase based distance measurement in the target space, if each of the information processing apparatuses 1 determines a parameter as the first example of a technique, it is possible to reduce the possibility of communication collision.

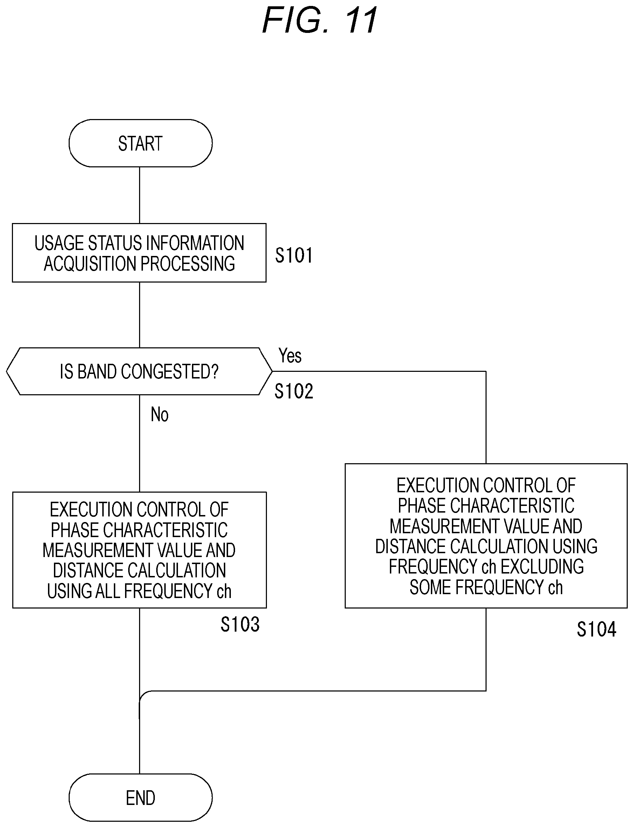

Fig. 11 is a flowchart illustrating an example of a specific processing procedure to be executed by the CPU 11 to realize the first example of a technique.

In step S101, the CPU 11 executes usage status information acquisition processing. In the present example, as described above, the usage status information is the execution result information of the carrier sense, and accordingly, in step S101, the CPU 11 causes the arithmetic unit 31 to execute the carrier sense for each frequency of the wireless communication band to be used in the phase based distance measurement, and acquires information indicating use/non-use for each frequency obtained as a result of the carrier sense as the usage status information.

In step S102 subsequent to step S101, the CPU 11 determines whether or not the band is congested. That is, in the present example, the CPU 11 determines whether or not the number of frequencies in use is greater than or equal to a predetermined threshold, corresponding to a case where the execution result information of the carrier sense is used as the usage status information.

In step S102, for example, in a case where the number of frequencies in use is not greater than or equal to the predetermined threshold and a determination result indicating that the band is not congested is obtained, the CPU 11 proceeds to step S103 and performs execution control of the phase characteristic measurement and the distance calculation using all the frequency channels (ch). That is, in the above-described example of all channels = 80 channels, the arithmetic unit 31 is controlled to execute phase characteristic measurement and distance calculation using the 80 channels.

On the other hand, in step S102, for example, in a case where the number of frequencies in use is greater than or equal to a predetermined threshold and a determination result indicating that the band is congested is obtained, the CPU 11 proceeds to step S104 and performs execution control of phase characteristic measurement and distance calculation using frequency channels excluding some frequency channels. That is, in the case of the example of all channels = 80 channels described above, for example, the arithmetic unit 31 is controlled to execute phase characteristic measurement and distance calculation using 40 channels that are half.

The CPU 11 ends a series of processing illustrated in Fig. 11 in response to execution of any one of the processing at step S103 or the processing at step S104.

Note that, in the series of processing illustrated in Fig. 11, the frequency at which the phase measurement is performed is divided into all frequencies or a part of frequencies according to the determination processing result of whether or not the band of step S102 is congested (steps S103 and S104). In this sense, the processing of steps S102, S103, and S104 corresponds to the processing of determining the parameter of the phase based distance measurement on the basis of the usage status information.

(2-2. Second example of technique)

In the second example of a technique, processing of determining a frequency range in which phase measurement is performed is performed as parameter determination processing.

Here, in the second example of a technique, it is assumed that the frequency in the phase characteristic measurement is changed as a frequency sweep. Specifically, the frequency in the phase characteristic measurement is changed in one of an ascending sweep in which the frequency is gradually increased and a descending sweep in which the frequency is gradually decreased.

First, also in this case, the CPU 11 determines whether or not the wireless communication band is congested on the basis of the usage status information. In the present example, in correspondence with the use of the information on the execution result of the carrier sense as the usage status information, the determination is performed, for example, as a determination as to whether the number of frequencies in use is greater than or equal to a predetermined threshold.

Then, in the case of determining that the wireless communication band is not congested, the CPU 11 in this case determines the frequency range in which the phase measurement is performed, that is, the sweep range of the frequency, as the first sweep range. Specifically, for example, in a case where the usable frequency band is from 2401 MHz to 2480 MHz, the first sweep range is, for example, a range from 2401 MHz to 2480 MHz, which is the entire frequency range (However, in a case where there is a frequency that is not permitted to be used within the entire frequency range, the frequency is excluded.).

On the other hand, in the case of determining that the wireless communication band is congested, the CPU 11 determines the frequency range in which the phase measurement is performed to be the second sweep range narrower than the first sweep range. For example, the second sweep range may be a half frequency range of the first sweep range. For example, in this case, the second sweep range may be a range from 2401 MHz to 2440 MHz, a range from 2441 MHz to 2480 MHz, or the like.

Then, the CPU 11 controls the arithmetic unit 31 to execute the phase characteristic measurement and the distance calculation in the determined frequency range.

By performing parameter determination as the second example of a technique as described above, it is possible to reduce the band occupancy in the frequency domain related to distance measurement in response to a case where the wireless communication band is congested. In particular, in a case where there is a plurality of information processing apparatuses 1 that performs phase based distance measurement in the target space, if each of the information processing apparatuses 1 determines a parameter as the second example of a technique, it is possible to reduce the possibility of occurrence of communication collision.

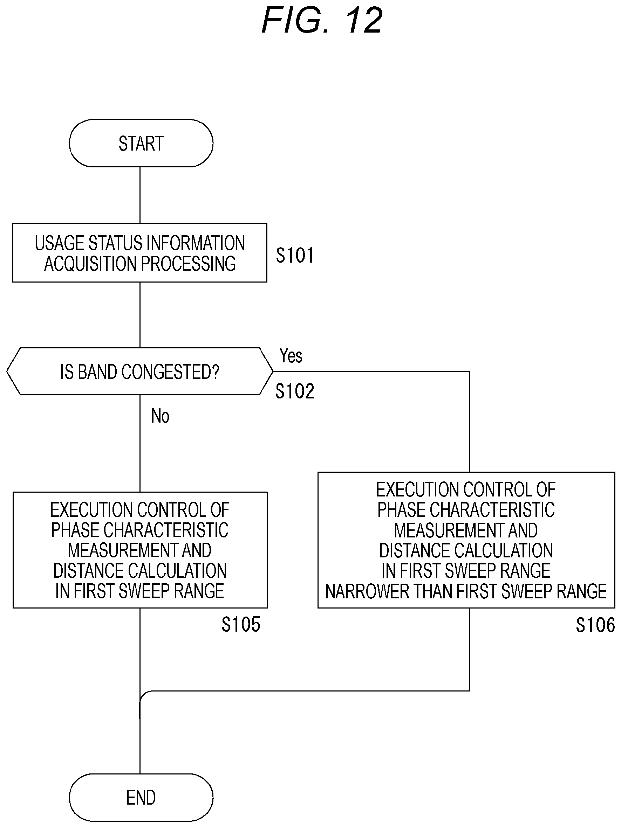

Fig. 12 is a flowchart illustrating an example of a specific processing procedure to be executed by the CPU 11 to realize the second example of a technique.

Also in this case, the CPU 11 first executes the usage status information acquisition processing in step S101, and then determines whether or not the band is congested in step S102. Since the details of the processing in steps S101 and S102 have been described in the first example of a technique, redundant description is avoided.

In a case where the determination result that the band is not congested is obtained in step S102, the CPU 11 proceeds to step S105 and performs execution control of the phase characteristic measurement and the distance calculation in the first sweep range. That is, in the present example, the arithmetic unit 31 is controlled to execute phase characteristic measurement and distance calculation in a frequency range of 2400 MHz to 2480 MHz, for example.

On the other hand, in a case where the determination result that the band is congested is obtained in step S102, the CPU 11 proceeds to step S106 and performs execution control of the phase characteristic measurement and the distance calculation in the second sweep range. That is, for example, the arithmetic unit 31 is controlled to execute the phase characteristic measurement and the distance calculation in the second sweep range that is a half frequency range of the first sweep range.

The CPU 11 ends a series of processing illustrated in Fig. 12 in response to execution of any one of the processing at step S105 or the processing at step S106.

Note that, in the series of processing illustrated in Fig. 12, the frequency range in which the phase measurement is performed is divided into the entire frequency range or a frequency range narrower than the entire frequency range depending on the determination processing result of whether or not the band of step S102 is congested (steps S105 and S106). In this sense, the processing of steps S102, S105, and S106 corresponds to the processing of determining the parameter of the phase based distance measurement on the basis of the usage status information.

(2-3. Third example of technique)

In the third example of a technique, processing of determining the number of antennas used for distance measurement is performed as the parameter determination processing.

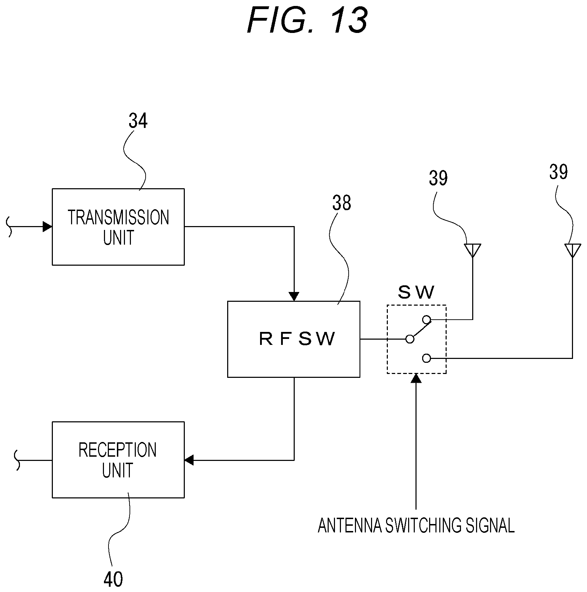

In the third example of a technique, it is assumed that the information processing apparatus 1 includes a plurality of antennas 39 as illustrated in Fig. 13. Note that an example in which the number of antennas = 2 is illustrated in the drawing, but the number of antennas may be three or more.

In the information processing apparatus 1 in this case, for example, the switch SW is inserted between the RF switch 38 and the plurality of antennas 39 as illustrated in the drawing, and by path switching of the switch SW, switching of the antenna 39 that sends out the transmission signal from the transmission unit 34 (that is, switching of the transmission antenna) and switching of the antenna 39 that supplies the reception signal to the reception unit 40 (that is, switching of the reception antenna) can be performed.

An antenna switching signal for instructing switching of the antenna 39 is input to the switch SW. The antenna switching signal is output by the arithmetic unit 31 illustrated in Fig. 3, for example.

The arithmetic unit 31 in this case is capable of performing the phase characteristic measurement for each antenna 39, and as the distance measurement mode, it is possible to selectively perform a "distance measurement mode using a plurality of antennas" in which one distance value obtained by, for example, averaging the respective distances calculated from the results of the phase characteristic measurement performed using any plurality of antennas 39 is set as the distance measurement result, and a "distance measurement mode using a single antenna" in which a distance value calculated from the results of the phase characteristic measurement performed using only any one antenna 39 is set as the distance measurement result.

In the third example of a technique, the CPU 11 determines whether or not the wireless communication band is congested on the basis of the usage status information. Here, it also corresponds to using the information of the execution result of the carrier sense as the usage status information, and the determination is performed, for example, as a determination as to whether or not the number of frequencies in use is greater than or equal to a predetermined threshold.

Then, in a case where the CPU 11 in the third example of a technique determines that the wireless communication band is not congested, the number of antennas 39 to be used for distance measurement is determined to be N (N is a natural number of 2 or more), and in a case where the CPU 11 determines that the wireless communication band is congested, the number of antennas 39 to be used for distance measurement is determined to be M (M < N). Specifically, in the present example, as described above as the "distance measurement mode using a plurality of antennas" and the "distance measurement mode using a single antenna", the number of antennas 39 used for distance measurement can be switched between "plurality" and "single". Therefore, the CPU 11 in this case determines the number of antennas 39 used for distance measurement as "plurality" (for example, N = 2) in the case of determining that the wireless communication band is not congested, and determines the number of antennas 39 used for distance measurement as "1" (M = 1) in the case of determining that the wireless communication band is congested.

Then, the CPU 11 controls the arithmetic unit 31 to execute the phase characteristic measurement and the distance calculation using the determined number of antennas 39.

By performing parameter determination as the third example of a technique as described above, it is possible to reduce the temporal band occupancy related to distance measurement in response to a case where the wireless communication band is congested. In particular, in a case where there is a plurality of information processing apparatuses 1 that performs the phase based distance measurement in the target space, if each of the information processing apparatuses 1 determines a parameter as the third example of a technique, it is possible to reduce the possibility of occurrence of communication collision.

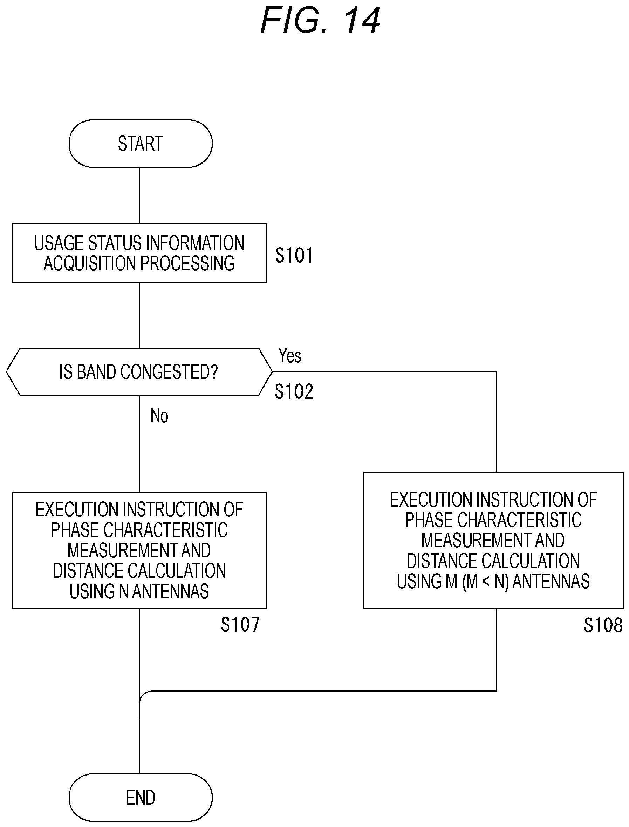

Fig. 14 is a flowchart illustrating an example of a specific processing procedure to be executed by the CPU 11 to realize the third example of a technique.

Also in this case, the CPU 11 first executes the usage status information acquisition processing in step S101, and then determines whether or not the band is congested in step S102. Since the details of the processing in steps S101 and S102 have been described in the first example of a technique, redundant description is avoided.

In a case where it is determined in step S102 that the band is not congested, the CPU 11 proceeds to step S107 and performs execution control of the phase characteristic measurement and the distance calculation using N antennas. That is, in the present example, the arithmetic unit 31 is controlled so as to execute phase characteristic measurement and distance calculation using, for example, N = 2 antennas 39, that is, to execute phase characteristic measurement and distance calculation in the "distance measurement mode using a plurality of antennas" described above.

On the other hand, in a case where the determination result that the band is congested is obtained in step S102, the CPU 11 proceeds to step S108 and performs execution control of the phase characteristic measurement and the distance calculation using the M antennas. That is, in the present example, the arithmetic unit 31 is controlled to execute the phase characteristic measurement and the distance calculation using, for example, M = 1 antenna 39, that is, execute the phase characteristic measurement and the distance calculation in the "distance measurement mode using a single antenna" described above.

The CPU 11 ends a series of processing illustrated in Fig. 14 in response to execution of any one of the processing at step S107 or the processing at step S108.

Note that, in the series of processing illustrated in Fig. 14, whether the number of antennas used for distance measurement is N or M is divided according to the determination processing result of step S102 as to whether or not the band is congested (steps S107 and S108). In this sense, the processing of steps S102, S107, and S108 corresponds to the processing of determining the parameter of the phase based distance measurement on the basis of the usage status information.

(2-4. Fourth example of technique)

In the fourth example of a technique, processing of determining a phase measurement time for each frequency is performed as the parameter determination processing.

The phase measurement time for each frequency is a measurement time of the phase θ for each frequency. In the measurement of the phase θ, the measurement signal is transmitted and received between the initiator and the reflector and between the reflector and the initiator, and the measurement time of the phase θ can be rephrased as a signal length of the measurement signal.

Also in this case, the CPU 11 determines whether or not the wireless communication band is congested on the basis of the usage status information. In the present example, in correspondence with the use of the information on the execution result of the carrier sense as the usage status information, the determination is performed, for example, as a determination as to whether the number of frequencies in use is greater than or equal to a predetermined threshold.

Then, the CPU 11 in this case determines the phase measurement time for each frequency to be X msec in the case of determining that the wireless communication band is not congested, and determines the phase measurement time to be Y msec (Y < X) in the case of determining that the wireless communication band is congested. For example, it is conceivable that Y is a half value of X.

Then, the CPU 11 controls the arithmetic unit 31 to execute the phase characteristic measurement and the distance calculation in which the phase measurement time for each frequency is set to the determined time.

By performing parameter determination as the fourth example of a technique as described above, it is possible to reduce the temporal band occupancy related to distance measurement in response to a case where the wireless communication band is congested. In particular, in a case where there is a plurality of information processing apparatuses 1 that performs the phase based distance measurement in the target space, if each of the information processing apparatuses 1 determines a parameter as the fourth example of a technique, it is possible to reduce the possibility of occurrence of communication collision.

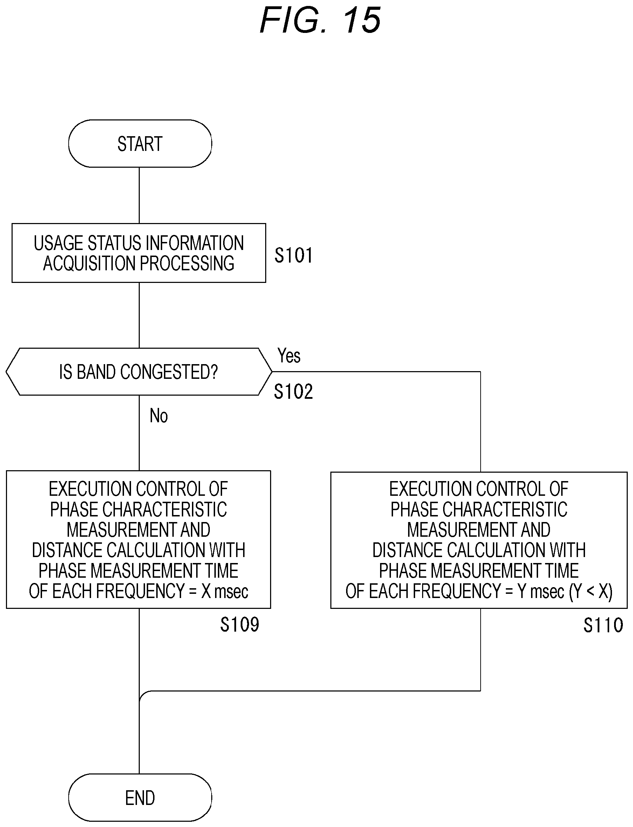

Fig. 15 is a flowchart illustrating an example of a specific processing procedure to be executed by the CPU 11 to realize the fourth example of a technique.

Also in this case, the CPU 11 first executes the usage status information acquisition processing in step S101, and then determines whether or not the band is congested in step S102. Since the details of the processing in steps S101 and S102 have been described in the first example of a technique, redundant description is avoided.

In a case where the determination result that the band is not congested is obtained in step S102, the CPU 11 proceeds to step S109 and performs execution control of the phase characteristic measurement and the distance calculation with the phase measurement time of each frequency = X msec.

On the other hand, in a case where the determination result that the band is congested is obtained in step S102, the CPU 11 proceeds to step S110 and performs execution control of the phase characteristic measurement and the distance calculation in which the phase measurement time of each frequency = Y msec.

The CPU 11 ends a series of processing illustrated in Fig. 15 in response to execution of any one of the processing at step S109 or the processing at step S110.

Note that, in the series of processing illustrated in Fig. 15, the phase measurement time for each frequency is divided into X msec and Y msec depending on the result of the determination processing of step S102 as to whether or not the band is congested (steps S109 and S110). In this sense, the processing of steps S102, S109, and S110 corresponds to the processing of determining the parameter of the phase based distance measurement on the basis of the usage status information.

(2-5. Fifth example of technique)

In the fifth example of a technique, processing of determining an execution interval of the phase characteristic measurement communication processing is performed as the parameter determination processing.

Also in this case, the CPU 11 determines whether or not the wireless communication band is congested on the basis of the usage status information. In the present example, in correspondence with the use of the information on the execution result of the carrier sense as the usage status information, the determination is performed, for example, as a determination as to whether the number of frequencies in use is greater than or equal to a predetermined threshold.

Then, the CPU 11 in this case determines that the execution interval of the phase characteristic measurement is $\alpha$ in a case where it is determined that the wireless communication band is not congested, and determines that the execution interval of the phase characteristic measurement is $\beta$ ($\beta > \alpha$) in a case where it is determined that the wireless communication band is congested. For example, it is conceivable that $\beta$ is an interval twice $\alpha$.

Then, the CPU 11 controls the arithmetic unit 31 to execute the phase characteristic measurement and the distance calculation according to the determined execution interval.

By performing parameter determination as the fifth example of a technique as described above, it is possible to reduce the temporal band occupancy related to distance measurement in response to a case where the wireless communication band is congested. In particular, in a case where there is a plurality of information processing apparatuses 1 that performs the phase based distance measurement in the target space, if each of the information processing apparatuses 1 determines a parameter as the fifth example of a technique, it is possible to reduce the possibility of occurrence of communication collision.

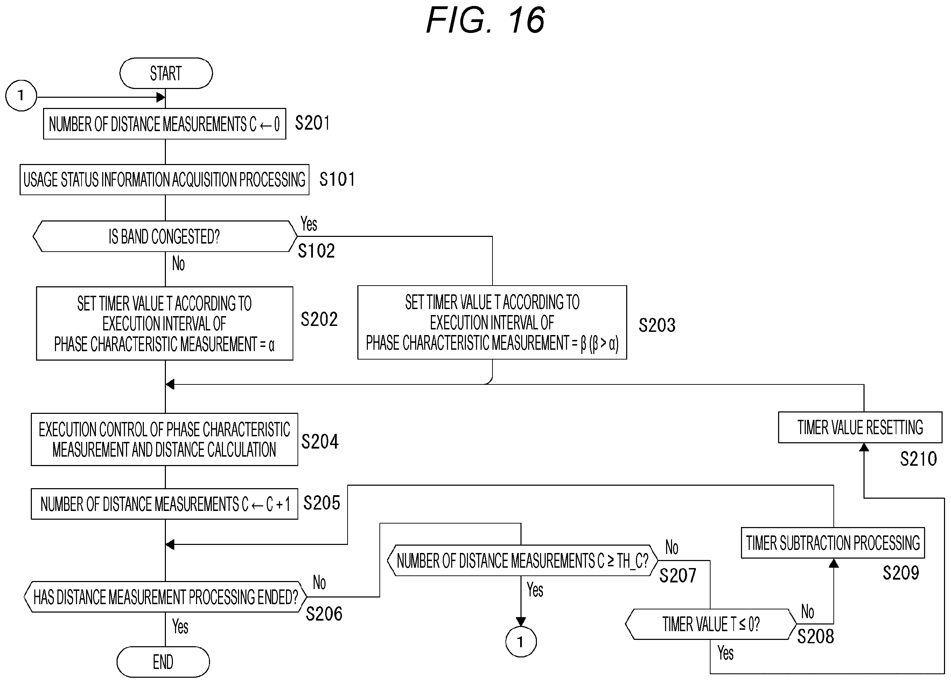

Fig. 16 is a flowchart illustrating an example of a specific processing procedure to be executed by the CPU 11 to realize the fifth example of a technique.

In this case, the CPU 11 first resets the number of distance measurements C to 0 in step S201. As will be apparent from the following description, the number of distance measurements C is managed here in order to reconfirm the usage status of the wireless communication band every time the distance measurement is executed a predetermined number of times (threshold TH_C) and to measure the phase characteristic at an execution interval corresponding to the latest usage status.

In response to the execution of the processing of step S201, the CPU 11 executes the processing of steps S101 and S102 (these processing have already been described, and thus duplicate description is avoided).

In a case where it is determined in step S102 that the band is not congested, the CPU 11 proceeds to step S202, sets the timer value T according to the execution interval of the phase characteristic measurement = $\alpha$, and then proceeds to step S204 to perform execution control of the phase characteristic measurement and the distance calculation. That is, the arithmetic unit 31 is controlled to execute the phase characteristic measurement and the distance calculation.

On the other hand, in a case where the determination result that the band is congested is obtained in step S102, the CPU 11 proceeds to step S203, sets the timer value T according to the execution interval of the phase characteristic measurement = $\beta$, and then proceeds to step S204 to perform execution control of the phase characteristic measurement and the distance calculation.

The processing in and after step S205 following step S204 is processing for realizing management of the execution interval of the phase characteristic measurement using the timer value T and resetting the execution interval of the phase characteristic measurement on the basis of the usage status information every time the number of distance measurements C reaches the threshold TH_C.

Specifically, in step S205, the CPU 11 increments the number of distance measurements C by 1, and in subsequent step S206, it is determined whether or not the distance measurement processing has ended. That is, it is determined whether or not a predetermined condition is satisfied that the distance measurement processing by the arithmetic unit 31 should be ended, for example, when the power of the information processing apparatus 1 is turned off, or when an end operation of an application program using a positioning result of the above-described navigation function or the like is performed.

In a case where the determination result indicating that the distance measurement processing is not ended is obtained in step S206, the CPU 11 proceeds to step S207 and determines whether or not the number of distance measurements C is greater than or equal to the threshold TH_C. In a case where a determination result indicating that the number of distance measurements C is not greater than or equal to the threshold TH_C is obtained, the CPU 11 proceeds to step S208 and determines whether or not the timer value T is less than or equal to 0. If the timer value T is not less than or equal to 0, processing of subtracting the timer value T by a predetermined value after waiting for a predetermined time is performed as timer subtraction processing of step S209, and the processing returns to step S206.

By the loop processing of steps S206 → S207 → S208 → S209 → S206, in a state where the positioning processing is not ended and the number of distance measurements C is less than the threshold TH_C, the timer value T is gradually subtracted with the lapse of time.

In a case where it is determined in step S208 that the timer value T is less than or equal to 0, the CPU 11 executes timer value resetting processing in step S210, that is, processing of resetting the timer value T to the value set in the last executed step S202 or S203, and returns to step S204.

As a result, the phase characteristic measurement is executed again according to the execution interval of the processing in steps S202 and S203. Furthermore, immediately before the re-execution of the phase characteristic measurement, the timer value T according to the execution interval of the last processing in steps S202 and S203 is reset.

By the series of processing as described above, in a state where the positioning processing is not ended and the number of distance measurements C is less than the threshold TH_C, the phase characteristic measurement and the distance calculation are repeated depending on the execution interval of the last one of steps S202 and S203.

In a case where it is determined in step S207 that the number of distance measurements C is greater than or equal to the threshold TH_C, the CPU 11 returns to step S201. As a result, every time the distance measurement is performed a predetermined number of times, the usage status of the wireless communication band is reconfirmed (S101, S102), and an appropriate execution interval of the phase characteristic measurement according to the latest usage status is determined (S202, S203).

Here, it is conceivable to set the threshold TH_C to, for example, two or more values. Alternatively, it is also conceivable to set the threshold TH_C = 1.

The CPU 11 ends the processing of the example illustrated in Fig. 16 in response to determining that the distance measurement processing is ended in step S206.

(2-6. Sixth example of technique)

Here, in the above description, an example has been described in which the carrier sense is performed in confirming the usage status of the wireless communication band. However, in a case where the carrier sense is performed in this manner, it is also possible to determine a parameter so that phase measurement is executed for a frequency channel other than a frequency channel recognized to be in use by the carrier sense among a plurality of frequency channels in the wireless communication band.

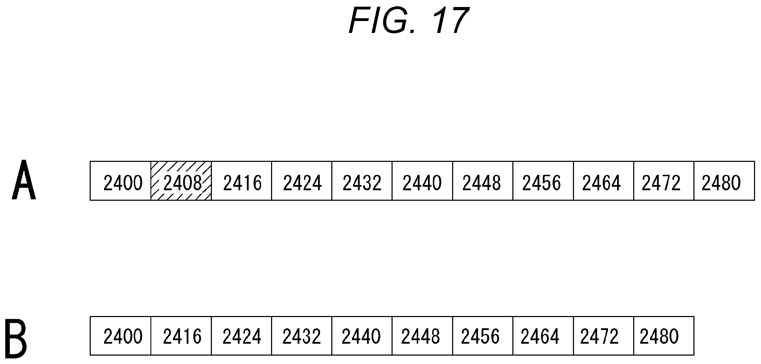

For example, in the example of Fig. 17, in a case where the frequency channels usable in the communication standard are from 2400 MHz to 2480 MHz in increments of 8 MHz, corresponding to a case where the channel of 2408 MHz is recognized to be in use by the carrier sense (Fig. 17A), the frequency channel excluding the channel of 2408 MHz is determined as the channel to be used for the phase measurement (Fig. 17B).

By performing parameter determination as the sixth example of a technique, it is possible to efficiently use the wireless communication band while avoiding collision.

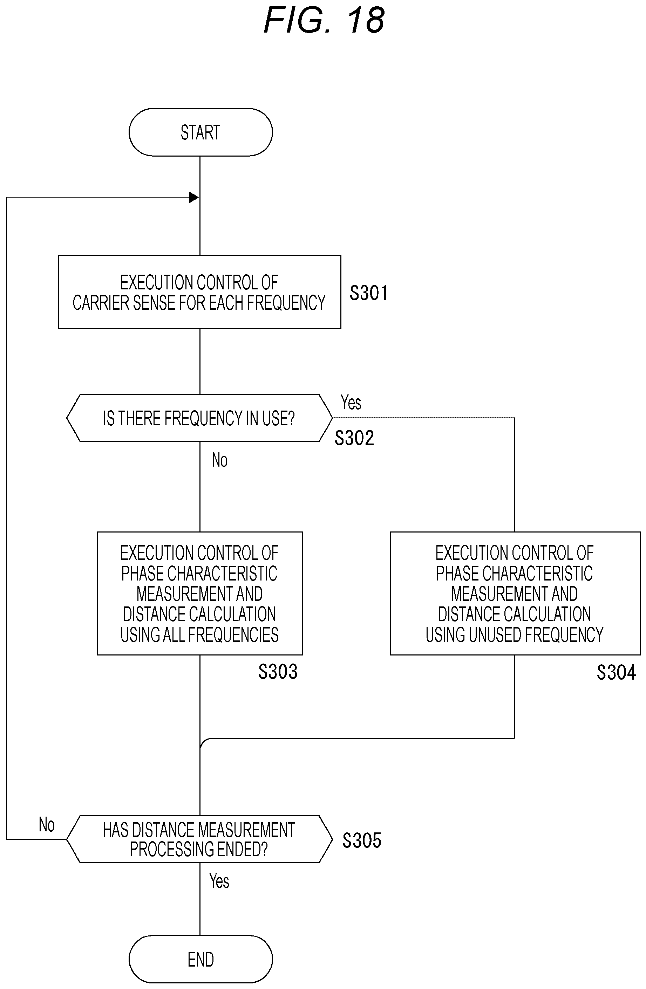

Fig. 18 is a flowchart illustrating an example of a specific processing procedure to be executed by the CPU 11 to realize the sixth example of a technique.

In this case, first, in step S301, the CPU 11 executes processing of controlling the arithmetic unit 31 to execute the carrier sense for each frequency as an execution instruction of the carrier sense for each frequency.

In step S302 following step S301, the CPU 11 determines whether or not there is a frequency in use. That is, result information of the carrier sense executed in step S301 is acquired, and it is determined whether or not there is a frequency in use on the basis of the result information.

In a case where it is determined in step S302 that there is no frequency in use, the CPU 11 proceeds to step S303 and performs execution control of the phase characteristic measurement and the distance calculation using all frequencies.

On the other hand, in a case where it is determined in step S302 that there is a frequency in use, the CPU 11 proceeds to step S304 and performs execution control of the phase characteristic measurement and the distance calculation using the unused frequency.

In response to the execution of the processing in step S303 or S304, the CPU 11 determines in step S305 whether or not the distance measurement processing has ended. The determination processing in step S305 is processing of determining whether or not a distance measurement processing end condition similar to the processing in step S206 described above is satisfied.

In a case where it is determined in step S305 that the distance measurement processing is not ended, the CPU 11 returns to step S301. That is, also in the next distance measurement, processing of determining a frequency channel recognized as unused in the carrier sense as a channel to be used for phase measurement is performed.

On the other hand, in a case where it is determined in step S305 that the distance measurement processing is ended, the CPU 11 ends the series of processing illustrated in Fig. 18.

Note that, in the series of processing illustrated in Fig. 18, whether to use all frequencies or unused frequencies is divided according to the determination processing result of step S302 as to whether there is a frequency in use (steps S303 and S304). In this sense, the processing of steps S302, S303, and S304 corresponds to the processing of determining the parameter of the phase based distance measurement on the basis of the usage status information.

Note that although Fig. 18 illustrates an example in which the carrier sense is performed for each distance measurement, it is also conceivable to perform the carrier sense for each of a plurality of distance measurements.

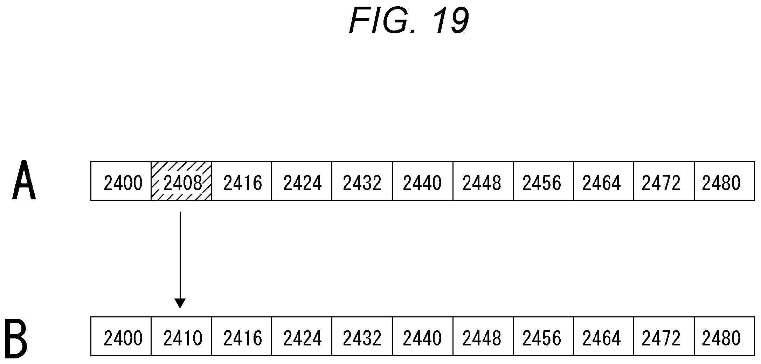

Furthermore, in the sixth example of a technique described above, it is assumed that the total number of frequency channels for which phase measurement is performed is reduced as in the example of Fig. 17 in a case where there is a frequency channel in use. However, as illustrated in Fig. 19, by performing phase measurement for a frequency different from the frequency in use, the total number of frequency channels for which phase measurement is performed can be made unchanged between a case where there is a frequency channel in use and a case where there is no frequency channel in use. At this time, it goes without saying that the frequency of the substitute channel of the channel that has been determined to be in use is selected so as not to overlap with the frequency of another channel that has not been determined to be in use. In the drawing, an example is illustrated in which the frequency of the substitute channel is selected to be 2410 MHz (frequencies avoiding frequency overlap with other channels recognized as unused) with respect to the frequency of the channel determined to be in use =2408 MHz.

<3. Another example of system configuration>

In the above example, the positioning processing based on the distance D is performed in the information processing apparatus 1. However, it is also conceivable that the positioning processing based on the distance D is performed in the server apparatus 100 configured to be able to communicate with the information processing apparatus 1.

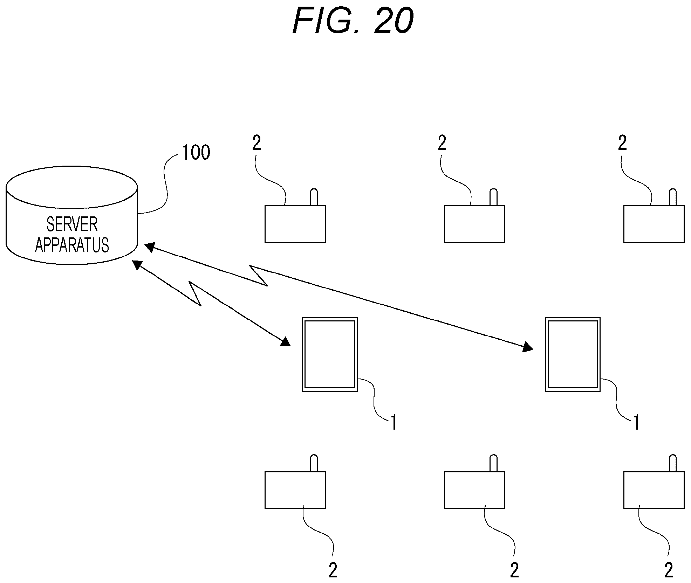

Fig. 20 illustrates a configuration example as another example of the positioning system in a case where the positioning processing based on the distance D is performed in the server apparatus 100 as described above.

The positioning system in this case is similar to that in the case of Fig. 1 in that a plurality of communication apparatuses 2 and an information processing apparatus 1 are provided, but is different from that in the case of Fig. 1 in that a server apparatus 100 is further added. The server apparatus 100 is configured as a computer apparatus including a CPU, and has a hardware configuration similar to that illustrated in Fig. 2 above, for example. The server apparatus 100 can perform data communication with the information processing apparatus 1 via a network line such as a local area network (LAN) or the Internet.

Fig. 20 illustrates an example in which a plurality of information processing apparatuses 1 is present in a target space in which the plurality of communication apparatuses 2 is disposed.

In this case, the server apparatus 100 may manage not only the information of the distance D calculated by the information processing apparatus 1 but also information other than the distance D obtained by the information processing apparatus 1. Furthermore, in a case where there are the plurality of information processing apparatuses 1 in the target space as illustrated in Fig. 20, the server apparatus 100 can also perform the positioning processing for each of the information processing apparatuses 1 on the basis of the information on the distance D received from the information processing apparatuses 1.

Moreover, in that case, it is also conceivable that the server apparatus 100 manages the number of information processing apparatuses 1 existing in the target space and the ID (identification information) of each information processing apparatus 1.

<4. Another example of usage status information generation>

Although the case where the usage status information of the wireless communication band is generated on the basis of the execution result of the carrier sense has been described above, the usage status information is not limited to the information based on the execution result of the carrier sense.

Hereinafter, another example of the generation of the usage status information will be described.

(4-1. First another example)

First, as first another example, the usage status information can be information on the number of simultaneous connections of communication devices that perform communication using a wireless communication band.

For example, in the BLE, a communication device can simultaneously connect a plurality of other communication devices. The "connection" of the "simultaneous connection" as used herein means a state in which a connection in communication is established.

For example, in a state where the information processing apparatus 1 configured as a smartphone or the like simultaneously connects a plurality of BLE compatible accessory devices such as earphones, headphones, and microphones, communication using the wireless communication band is performed with these accessory devices. Therefore, it can be said that the more communication devices are simultaneously connected, the more the wireless communication band tends to be congested.

Therefore, the number of simultaneous connections of other communication devices is used as an index indicating the degree of congestion of the wireless communication band.

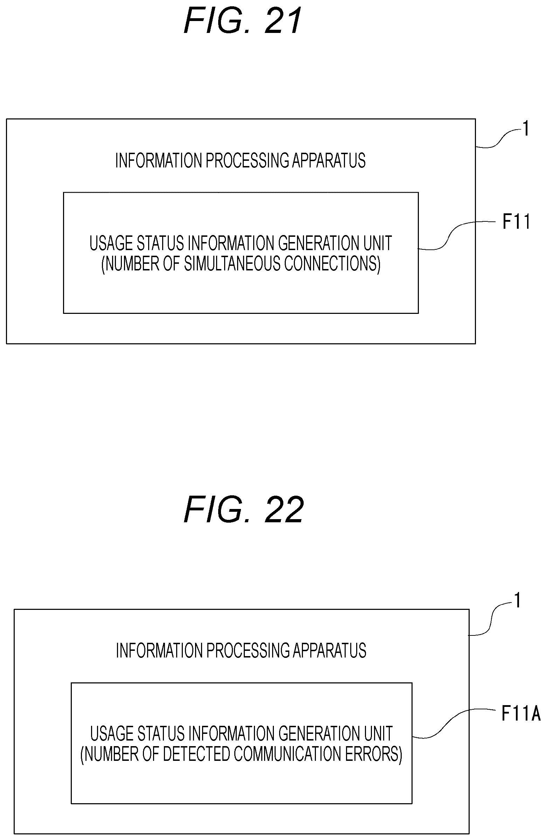

In this case, the information processing apparatus 1 has a function as a usage status information generation unit F11 as illustrated in Fig. 21. The usage status information generation unit F11 generates, as the usage status information, information indicating the number of simultaneous connections of communication devices that perform communication using the target wireless communication band.

It is conceivable that the processing of detecting the number of simultaneous connections is performed by the arithmetic unit 31, for example. In this case, the usage status information generation unit F11 is a function of the arithmetic unit 31. Alternatively, it is conceivable that the processing of detecting the number of simultaneous connections is performed by the CPU 11, and in that case, the usage status information generation unit F11 is a function of the CPU 11.

Here, in a case where the first another example is adopted, the CPU 11 performs processing of acquiring the usage status information indicating the number of simultaneous connections as described above as the usage status information acquisition processing in step S101 described above. Furthermore, it is conceivable to perform the determination processing of step S102 as, for example, determination processing of determining whether or not the number of simultaneous connections indicated by the usage status information is greater than or equal to a predetermined threshold.

Note that, in the above, an example has been described in which the number of simultaneous connections of other communication devices to the information processing apparatus 1 as a positioning target apparatus is used. However, for example, in a case where the communication apparatus 2 is set as a master in communication, the communication apparatus 2 may simultaneously connect a plurality of the information processing apparatuses 1. For example, there is a case where the communication apparatus 2 as a master simultaneously connects the information processing apparatuses 1 as a plurality of slaves and performs phase characteristic measurement with each of the information processing apparatuses 1. In that case, it is also conceivable to use information on the number of simultaneous connections of other communication devices to the communication apparatus 2 as the usage status information.

(4-2. Second another example)

In second another example, information on the number of communication errors detected for communication using a wireless communication band in a target space is used as usage status information.

The number of detected communication errors can be regarded as the number of occurrences of collisions in the wireless communication band, and can be used as an index indicating the degree of congestion of the band.

In this case, the information processing apparatus 1 has a function as a usage status information generation unit F11A as illustrated in Fig. 22. The usage status information generation unit F11A generates information indicating the number of communication errors detected for communication using the target wireless communication band as the usage status information.

For example, it is conceivable that the communication error detection processing is performed by the arithmetic unit 31, and it is conceivable that the usage status information generation unit F11A is a function of the arithmetic unit 31. Alternatively, it is conceivable that the information on the number of detected communication errors is generated by the CPU 11 on the basis of the result of the communication error detection processing performed by the arithmetic unit 31 (For example, the number of communication errors detected by the arithmetic unit 31 per unit time is counted.). In this case, the usage status information generation unit F11A is a function of the CPU 11.

Here, in a case where the second another example is adopted, the CPU 11 performs processing of acquiring the usage status information indicating the number of detected communication errors as described above as the usage status information acquisition processing in step S101 described above. Furthermore, the determination processing in step S102 may be performed, for example, as determination processing or the like as to whether or not the number of detected communication errors indicated by the usage status information is greater than or equal to a predetermined threshold.

(4-3. Third another example)

In third another example, information obtained on the basis of a measurement value in the phase based distance measurement executed in the past in the target space is used as the usage status information.

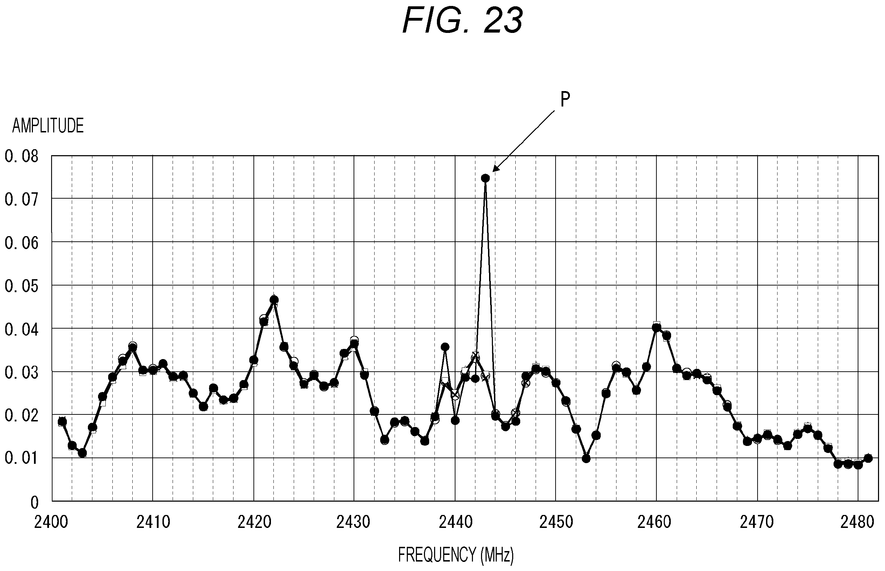

Fig. 23 illustrates an example of a measurement result of the amplitude (the above-described I channel signal "I") for each frequency calculated in the process of phase measurement for each frequency. Specifically, the amplitude measurement results for a plurality of frequencies are illustrated in an overlapping manner.

In the drawing, a portion where the amplitude indicated by "P" protrudes is a portion where a collision occurs. The singular point in the past amplitude measurement result can be counted and used as the usage status information.

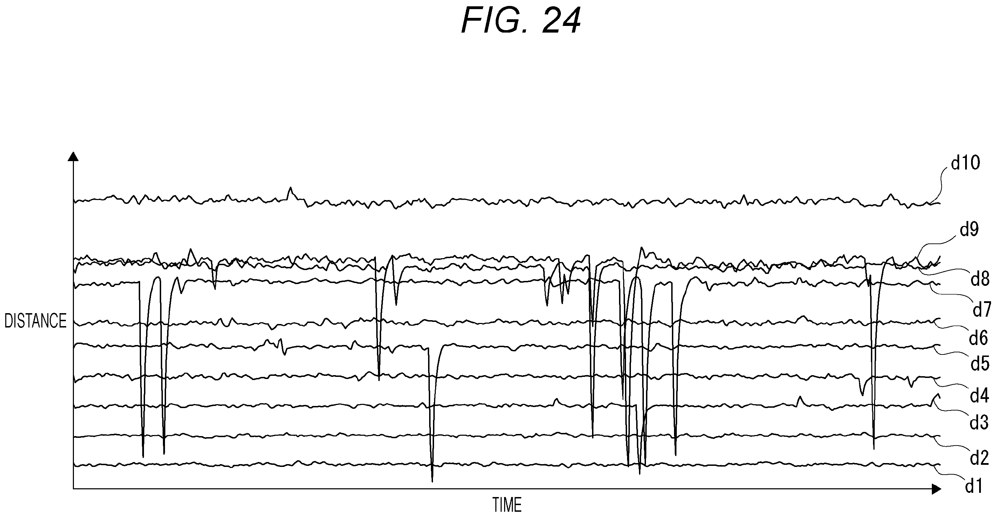

Furthermore, Fig. 24 illustrates a waveform of the distance D calculated at each of a plurality of points when the phase based distance measurement is performed with the target communication apparatus 2 in a stationary state for a predetermined time at each of the points. Here, calculated distance waveforms at 10 points at which the distances D to the target communication apparatus 2 are d1, d2, d3, ..., and d10, respectively, are illustrated.

As can be seen with reference to this drawing, it can be confirmed that a portion where the waveform of the distance D is greatly disturbed occurs even in the stationary state. As described above, the portion where the waveform of the distance D is greatly disturbed, in other words, the portion where the outlier of the distance D occurs is the portion where the error of the distance D occurs due to the collision.

Therefore, such outliers of the distance D can be counted and used as the usage status information.

As described above, the measurement value in the phase based distance measurement executed in the past in the target space can be used as information for estimating the usage status of the wireless communication band.

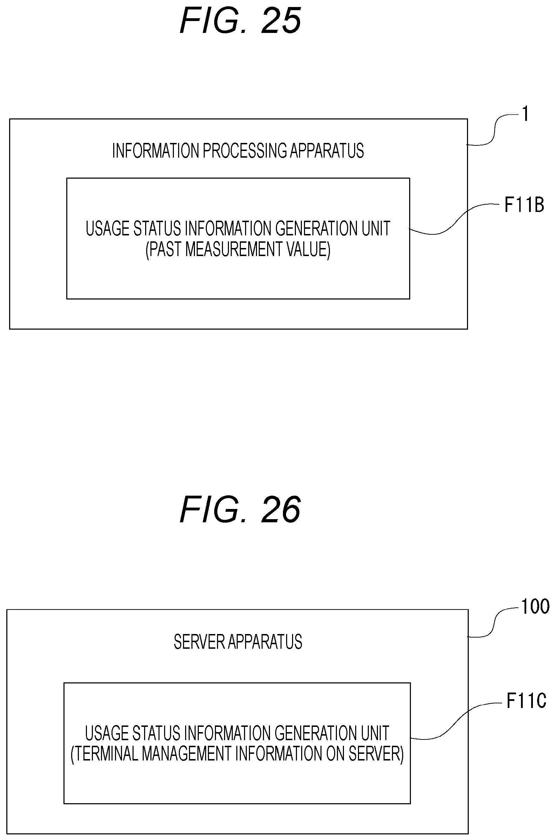

In the third another example, the information processing apparatus 1 has a function as a usage status information generation unit F11B as illustrated in Fig. 25. The usage status information generation unit F11A generates usage status information based on a measurement value in the phase based distance measurement executed in the past in the target space.

Specifically, for example, the usage status information is generated based on the amplitude for each frequency measured in the past as illustrated in Fig. 23, or the usage status information is generated based on the value of the distance D measured in the past as illustrated in Fig. 24.

As the usage status information based on the amplitude, for example, it is conceivable to detect the number of times or the frequency at which the amplitude exceeding the predetermined threshold is obtained with respect to the amplitude for each frequency calculated by the arithmetic unit 31 within the past predetermined period, and generate the usage status information as information indicating the detected number of times or frequency.

Furthermore, as the usage status information based on the value of the distance D, for example, it is conceivable to detect, for example, the number or frequency of values in which the amount of change from the immediately preceding value is greater than or equal to a predetermined threshold for the distance D calculated by the arithmetic unit 31 within a past predetermined period, and generate the usage status information as information indicating the detected number of times or frequency.

The function as the usage status information generation unit F11A can be a function of the arithmetic unit 31 or a function of the CPU 11.

In a case where the third another example is adopted, as the usage status information acquisition processing in step S101 described above, the CPU 11 performs processing of acquiring the usage status information indicating the number of times or frequency of obtaining the singular point of the amplitude or the outlier of the distance D as described above. Furthermore, it is conceivable to perform the determination processing of step S102 as, for example, determination processing of determining whether or not the value of the number of times or frequency indicated by the usage status information is greater than or equal to a predetermined threshold.

(4-4. Fourth another example)

A fourth another example is an example in which information generated by another device that is separate from the communication device that executes the phase characteristic measurement communication processing as the information processing apparatus 1, the communication apparatus 2, or the like, and is configured to be communicable with the communication device on the basis of a communication result with the communication device is used as the usage status information.

Specifically, information generated by the server apparatus 100 on the basis of a result of communication with the information processing apparatus 1 in a case where a positioning system as another example as illustrated in Fig. 20 above is assumed can be cited.

More specifically, as exemplified above, in a case where the server apparatus 100 manages the number of existence of the plurality of information processing apparatuses 1 existing in the target space, information indicating the number of existence is used as the usage status information.

In this case, the server apparatus 100 has a function as a usage status information generation unit F11C as illustrated in Fig. 26. The usage status information generation unit F11C generates, as the usage status information, information based on a result of communication with the information processing apparatuses 1, such as the information on the number of existence described above.

In a case where the fourth another example is adopted, as the usage status information acquisition processing in step S101 described above, the CPU 11 performs processing of acquiring the usage status information indicating the number of existence of the information processing apparatuses 1 in the target space from the server apparatus 100. Furthermore, it is conceivable to perform the determination processing of step S102 as, for example, determination processing of determining whether or not the numerical value indicated by the usage status information is greater than or equal to a predetermined threshold.

Note that although the information on the number of communication devices present managed by the server apparatus 100 has been exemplified above as an example of the "information generated on the basis of the result of communication with the communication device" by the "another device", the "information generated on the basis of the result of communication with the communication device" by the "another device" may be other information, such as information on the number of detected communication errors and the total number of simultaneous connections in the target space generated from the information on the number of detected communication errors and the number of simultaneous connections acquired from each "communication device" by the "another device", for example.

<5. Modification>

Note that, the embodiments are not limited to the specific examples described above, and may have configurations as various modifications.

For example, in the above description, when the processing until the distance D is obtained by the phase based distance measurement by applying the parameter determination method as an embodiment is broadly divided into the following four processing:

<A> Generation processing of usage status information;
<B> Parameter determination processing based on usage status information;
<C> Phase characteristic measurement communication processing based on determined parameter; and
<D> Calculation processing of distance based on phase $\theta$ for each frequency obtained by communication processing,

an example in which the information processing apparatus 1 performs all of <A>, <B>, <C> and <D>, and an example (the fourth another example described above) in which the server apparatus 100 performs only <A> and the information processing apparatus 1 performs <B>, <C> and <D> have been described, and however, various variations can be considered as to which apparatus performs the processing of <A>, <B>, <C> and <D>.

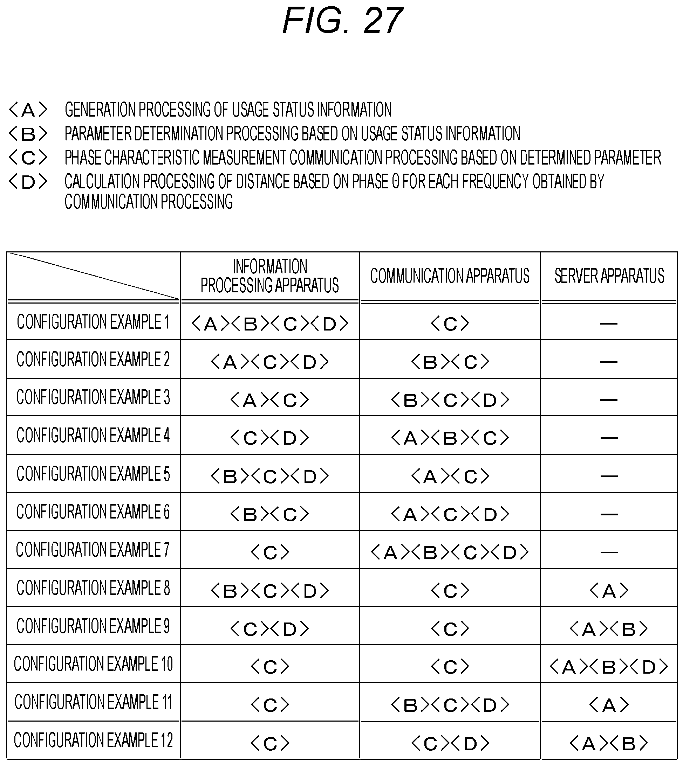

This point is summarized in the table of Fig. 27.

As illustrated in the drawing, variations illustrated as Configuration Examples 1 to 12 can be considered as to which apparatus is responsible for the processing of <A>, <B>, <C>, and <D>.

Configuration Examples 1 to 7 are examples in which the generation processing of <A> is performed by an apparatus other than the server apparatus 100, and Configuration Examples 8 to 12 are examples in which the generation processing of <A> is performed by the server apparatus 100. Among them, the Configuration Example 1 and Configuration Example 8 have been already exemplified, and are an example in which the information processing apparatus 1 performs all of <A>, <B>, <C>, and <D> and an example in which the server apparatus 100 performs only <A> and the information processing apparatus 1 performs <B>, <C>, and <D>.

Here, the communication processing of <C> is performed by both the information processing apparatus 1 and the communication apparatus 2.

In Configuration Examples 1 to 7, the generation processing of <A> is performed as the processing of generating the usage status information from a result of the carrier sense or the processing of generating the usage status information by any of the methods described as the first to third another examples.

On the other hand, in Configuration Examples 8 to 12, the generation processing of <A> is performed as the processing of generating the usage status information by the method described as the fourth another example.

Furthermore, as illustrated in Fig. 27, the parameter determination processing of <B> may be executed by the communication apparatus 2 or the server apparatus 100 in addition to being executed by the information processing apparatus 1. At this time, in a case where the communication apparatus 2 performs the processing of <B> and the information processing apparatus 1 performs the generation processing of <A> as in Configuration Examples 2 and 3, the communication apparatus 2 acquires the usage status information generated by the information processing apparatus 1 and uses the usage status information for the parameter determination processing of <B>. Furthermore, in a case where the communication apparatus 2 performs the processing of <B> and the server apparatus 100 performs the generation processing of <A> as in Configuration Example 11, the communication apparatus 2 acquires the usage status information generated by the processing of <A> by the server apparatus 100 and uses the usage status information for the parameter determination processing of <B>.

Furthermore, in a case where the server apparatus 100 performs the parameter determination processing of <B> as in Configuration Examples 9, 10, and 12, the server apparatus 100 instructs the parameter determined in the parameter determination processing of <B> to the information processing apparatus 1 or the communication apparatus 2, and the phase characteristic measurement communication processing based on the parameter of <C> is performed in the information processing apparatus 1 and the communication apparatus 2.

Furthermore, the distance calculation processing of <D> may also be executed by the communication apparatus 2 or the server apparatus 100 in addition to being executed by the information processing apparatus 1 (Configuration Examples 3, 6, 7, 10, and 11). At this time, in a case where the server apparatus 100 performs the distance calculation processing of <D> as in Configuration Example 10, the server apparatus 100 acquires the information of the phase $\theta$ for each frequency obtained as a result of the communication processing of <C> from the information processing apparatus 1 or the communication apparatus 2 and uses the information for the distance calculation processing of <D>.

Here, in the above description, an example has been described in which wireless communication for the phase based distance measurement is performed as communication based on the BLE standard, but the wireless communication can also be communication based on another wireless communication standard such as ultra wide band (UWB).

<6. Summary of embodiments>

As described above, the information processing apparatus (the information processing apparatus 1, or the communication apparatus 2, or the server apparatus 100.) as the embodiment includes the determination processing unit (determination processing unit F1) that performs the parameter determination processing of determining the parameter of the phase based distance measurement using the wireless communication band on the basis of the usage status of the wireless communication band.

According to the configuration described above, it is possible to determine the parameter of the phase based distance measurement according to a congestion state of the wireless communication band. For example, in a case where the wireless communication band is congested, it is possible to take measures such as increasing an execution interval of the phase characteristic measurement processing or reducing a frequency and the number of antennas to be used.

Therefore, it is possible to reduce the possibility of occurrence of communication collision and to efficiently use a finite wireless communication band.

Furthermore, in the information processing apparatus as the embodiment, the determination processing unit performs, as the parameter determination processing based on the usage status, processing of determining an execution interval of the phase characteristic measurement processing, which is processing of measuring the phase for each frequency in the phase based distance measurement (fifth example of a technique: see Fig. 16).

As a result, in a case where the wireless communication band is congested, it is possible to appropriately adjust the temporal band occupancy related to distance measurement according to the congestion state of the wireless communication band, for example, by increasing the execution interval of the phase characteristic measurement processing to reduce the temporal band occupancy related to distance measurement.

Therefore, a finite wireless communication band can be efficiently used.

Moreover, in the information processing apparatus as the embodiment, the determination processing unit performs processing of determining the number of frequencies for which phase measurement is to be performed as the parameter determination processing based on the usage status (first example of a technique: see Fig. 11).

As a result, in a case where the wireless communication band is congested, it is possible to appropriately adjust the band occupancy on the frequency plane related to the distance measurement according to the congestion state of the wireless communication band, such as reducing the number of frequencies for which phase measurement is performed to reduce the band occupancy on the frequency plane related to the distance measurement.

Therefore, a finite wireless communication band can be efficiently used.

Further, in the information processing apparatus as the embodiment, the determination processing unit performs processing of determining the phase measurement time for each frequency as the parameter determination processing based on the usage status (fourth example of a technique: see Fig. 15).

As a result, in a case where the wireless communication band is congested, it is possible to appropriately adjust the temporal band occupancy related to distance measurement according to the congestion state of the wireless communication band, such as shortening the phase measurement time for each frequency to reduce the temporal band occupancy related to distance measurement.

Therefore, a finite wireless communication band can be efficiently used.

Furthermore, in the information processing apparatus as the embodiment, the determination processing unit performs processing of determining a frequency range in which phase measurement is performed as the parameter determination processing based on the usage status (second example of a technique: see Fig. 12).

As a result, it is possible to appropriately adjust the band occupancy on the frequency surface related to the distance measurement according to the congestion state of the wireless communication band, such as narrowing the frequency range in which the phase measurement is performed to reduce the band occupancy on the frequency surface related to the distance measurement in a case where the wireless communication band is congested.

Therefore, a finite wireless communication band can be efficiently used.

Moreover, in the information processing apparatus as the embodiment, the determination processing unit performs processing of determining the number of antennas used for distance measurement as the parameter determination processing based on the usage status (third example of a technique: see Fig. 14).

As a result, in a case where the wireless communication band is congested, it is possible to appropriately adjust the temporal band occupancy related to distance measurement according to the congestion state of the wireless communication band, for example, by reducing the temporal band occupancy related to distance measurement by performing distance measurement using only a single antenna instead of performing redundant distance measurement using a plurality of antennas.

Therefore, a finite wireless communication band can be efficiently used.

Further, in the information processing apparatus as the embodiment, the determination processing unit uses result information of the carrier sense performed for the wireless communication band in the target space as the usage status information representing the usage status.

By performing the carrier sense, it is possible to appropriately recognize the usage status of the wireless communication band.

Therefore, it is possible to determine the parameter of the phase based distance measurement on the basis of the usage status information appropriately indicating the usage status of the wireless communication band, and to achieve efficient use of the wireless communication band with high accuracy.

Furthermore, in the information processing apparatus as the embodiment, the determination processing unit determines the parameter so that the phase measurement in the phase based distance measurement is performed for the frequency channel other than the frequency channel recognized to be in use by the carrier sense among the plurality of frequency channels in the wireless communication band (sixth example of a technique: see Fig. 18).

As a result, it is possible to efficiently use the wireless communication band while avoiding collision.

Moreover, in the information processing apparatus as the embodiment, the determination processing unit uses information on the number of simultaneous connections of communication devices that perform communication using the wireless communication band as the usage status information representing the usage status (first another example: see Fig. 21).

If the number of simultaneous connections of the communication devices that perform communication using the same wireless communication band is large, it means that there are many communication devices that use the wireless communication band, and the number of simultaneous connections can be used as an index indicating the degree of congestion of the wireless communication band in the target space.

Therefore, by using the information of the number of simultaneous connections as the usage status information, it is possible to determine the parameter of the phase based distance measurement on the basis of the usage status information appropriately indicating the usage status of the wireless communication band, and to achieve efficient use of the wireless communication band with high accuracy.

Further, in the information processing apparatus as the embodiment, the determination processing unit uses information on the number of communication errors detected for communication using the wireless communication band in the target space as the usage status information representing the usage status (second another example: see Fig. 22).

In the target space, if there are many communication collisions, the number of detected communication errors also increases, and the number of detected communication errors can be used as an index indicating the degree of congestion of the wireless communication band in the target space.

Therefore, by using the information of the number of detected communication errors as the usage status information, it is possible to determine the parameter of the phase based distance measurement on the basis of the usage status information appropriately indicating the usage status of the wireless communication band, and to achieve efficient use of the wireless communication band with high accuracy.

Furthermore, in the information processing apparatus as the embodiment, the determination processing unit uses, as the usage status information representing the usage status, information obtained on the basis of a measurement value in the phase based distance measurement executed in the past in the target space (third another example: see Fig. 25).

If there are many communication collisions in the target space, an error also occurs in the measurement value in the phase based distance measurement, and it is possible to estimate the degree of congestion of the wireless communication band on the basis of the number of occurrences, the occurrence frequency, and the like of the error.

Therefore, by using the information based on the past measured value in the phase based method as the usage status information, the parameter of the phase based distance measurement can be determined on the basis of the usage status information appropriately indicating the usage status of the wireless communication band, and efficient use of the wireless communication band can be achieved with high accuracy.

Moreover, in the information processing apparatus as the embodiment, the determination processing unit uses, as the usage status information representing the usage status, information generated on the basis of a result of communication with the communication device by another device that is separate from the communication device that executes the phase characteristic measurement communication processing that is communication processing for measuring the phase for each frequency in the phase based distance measurement, and is configured to be communicable with the communication device (fourth another example: see Fig. 26).

The another device described above is a device capable of managing information from which the congestion state of the wireless communication band can be measured, such as the number of communication devices existing in the target space, the number of communication errors detected in the communication devices, the number of simultaneous connections, and the like, from the result of communication with the communication devices.

Therefore, by using the usage status information as the generation information of such another device, the parameter of the phase based distance measurement can be determined on the basis of the usage status information appropriately indicating the usage status of the wireless communication band, and efficient use of the wireless communication band can be achieved with high accuracy.

Further, in the information processing apparatus as the embodiment, the phase based distance measurement is performed by wireless communication of BLE.

As a result, it is possible to reduce the possibility of communication collision corresponding to the case of performing the phase based distance measurement by the wireless communication of BLE, and it is possible to efficiently use a finite wireless communication band.

Furthermore, an information processing method as the embodiment is an information processing method in which an information processing apparatus performs, on the basis of a usage status of a wireless communication band, parameter determination processing of determining a parameter of phase based distance measurement using the wireless communication band.

Such an information processing method can produce functions and effects similar to the functions and effects produced by the information processing apparatus as the embodiment described above.

Here, as the embodiment, a program may be considered, for example, for causing a CPU, a digital signal processor (DSP), or the like, or a device including the CPU, the DSP, or the like, to execute the processing by the determination processing unit F1 described with reference to Figs. 11, 12, 14, 15, 16, 18, and the like.

That is, the program of the embodiment is a program that can be read by a computer apparatus, and causes the computer apparatus to realize a function of performing, on the basis of a usage status of a wireless communication band, parameter determination processing of determining a parameter of phase based distance measurement using the wireless communication band.

With such a program, the function as the determination processing unit F1 described above can be achieved in a device as the information processing apparatus 1 or the like.

The program described above can be recorded in advance in an HDD as a recording medium built in a device such as a computer apparatus, a ROM in a microcomputer including a CPU, or the like.

Alternatively, the program can be temporarily or permanently stored (recorded) in a removable recording medium such as a flexible disk, a compact disc read only memory (CD-ROM), a magneto optical (MO) disk, a digital versatile disc (DVD), a Blu-ray Disc (registered trademark), a magnetic disk, a semiconductor memory, or a memory card. Such a removable recording medium can be provided as so-called package software.

Furthermore, such a program can be installed from the removable recording medium into a personal computer or the like, or can be downloaded from a download site via a network such as a LAN or the Internet.

Furthermore, such a program is suitable for providing the determination processing unit F1 according to the embodiment in a wide range. For example, by downloading the program to a personal computer, a mobile information processing apparatus, a mobile phone, a game device, a video device, a personal digital assistant (PDA), or the like, the personal computer or the like can be caused to function as an apparatus that realizes the processing as the determination processing unit F1 according to the present disclosure.

Note that, the effects described in the present specification are merely examples and are not limited, and other effects may be provided.

<7. Present technology>

Note that the present technology can also have the following configurations.

(1) An information processing apparatus including
a determination processing unit that, on the basis of a usage status of a wireless communication band, performs parameter determination processing of determining a parameter of phase based distance measurement using the wireless communication band.

(2) The information processing apparatus according to (1) described above, in which
the determination processing unit performs, as the parameter determination processing based on the usage status, processing of determining an execution interval of phase characteristic measurement processing that is processing of measuring a phase for each frequency in phase based distance measurement.

(3) The information processing apparatus according to (1) or (2) described above, in which
the determination processing unit performs processing of determining the number of frequencies for which phase measurement is to be performed as the parameter determination processing based on the usage status.

(4) The information processing apparatus according to any one of (1) to (3) described above, in which
the determination processing unit performs processing of determining a phase measurement time for each frequency as the parameter determination processing based on the usage status.

(5) The information processing apparatus according to any one of (1) to (4) described above, in which
the determination processing unit performs processing of determining a frequency range in which phase measurement is performed as the parameter determination processing based on the usage status.

(6) The information processing apparatus according to any one of (1) to (5) described above, in which
the determination processing unit performs processing of determining the number of antennas to be used for distance measurement as the parameter determination processing based on the usage status.

(7) The information processing apparatus according to any one of (1) to (6) described above, in which
the determination processing unit uses result information of carrier sense performed for the wireless communication band in a target space as usage status information representing the usage status.

(8) The information processing apparatus according to (7) described above, in which
the determination processing unit determines the parameter so that phase measurement in the phase based distance measurement is performed, among a plurality of frequency channels in the wireless communication band, on the frequency channels other than a frequency channel recognized to be in use by the carrier sense.

(9) The information processing apparatus according to any one of (1) to (8) described above, in which
the determination processing unit uses, as usage status information representing the usage status, information on the number of simultaneous connections of communication devices that perform communication using the wireless communication band.

(10) The information processing apparatus according to any one of (1) to (9) described above, in which
the determination processing unit uses, as usage status information representing the usage status, information on the number of detected communication errors for communication using the wireless communication band in a target space.

(11) The information processing apparatus according to any one of (1) to (10) described above, in which
the determination processing unit uses, as usage status information representing the usage status, information obtained on the basis of a measurement value in the phase based distance measurement executed in the past in a target space.

(12) The information processing apparatus according to any one of (1) to (11) described above, in which
the determination processing unit uses, as usage status information representing the usage status, information generated on the basis of a result of communication with a communication device that executes phase characteristic measurement communication processing that is communication processing for measuring a phase for each frequency in the phase based distance measurement, the information being generated by another device that is separate from the communication device and is configured to be communicable with the communication device.

(13) The information processing apparatus according to any one of (1) to (12) described above, in which
the phase based distance measurement is performed by wireless communication of BLE.

(14) An information processing method including,

by an information processing apparatus,
performing, on the basis of a usage status of a wireless communication band, parameter determination processing of determining a parameter of phase based distance measurement using the wireless communication band.

(15) A program readable by a computer apparatus, the program causing the computer apparatus to implement a function of
performing, on the basis of a usage status of a wireless communication band, parameter determination processing of determining a parameter of phase based distance measurement using the wireless communication band.

REFERENCE SIGNS LIST

| | |
|---|---|
| 1 | Information processing apparatus |
| 2 | Communication apparatus |
| 11 | CPU |
| 12 | ROM |
| 13 | RAM |
| 19 | Storage unit |
| 20 | Communication unit |
| 21 | Drive |
| 22 | Removable recording medium |
| 30 | Wireless communication module |
| 31 | Arithmetic unit |
| 31a | Frequency-related phase characteristic acquisition unit |
| 31b | Distance calculation unit |
| 32 | Modulator |
| 33 | DAC |
| 34 | Transmission unit |
| 35 | BPF |
| 36 | Mixer |
| 37 | Frequency synthesizer |
| 38 | RF switch |
| 39 | Antenna |
| 40 | Reception unit |
| 41 | LNA |
| 42 | Mixer |
| 43, 45 | BPF |
| 44, 46 | VGA |
| 47 | ADC |
| F1 | Determination processing unit |
| SW | Switch |
| 100 | Server apparatus |
| F11, F11A, F11B, F11C | Usage status information generation unit |

**Claims**

1. An information processing apparatus comprising
a determination processing unit that, on a basis of a usage status of a wireless communication band, performs parameter determination processing of determining a parameter of phase based distance measurement using the wireless communication band.

2. The information processing apparatus according to claim 1,
   wherein
   the determination processing unit performs, as the parameter determination processing based on the usage status, processing of determining an execution interval of phase characteristic measurement processing that is processing of measuring a phase for each frequency in phase based distance measurement.

3. The information processing apparatus according to claim 1,
   wherein
   the determination processing unit performs processing of determining a number of frequencies for which phase measurement is to be performed as the parameter determination processing based on the usage status.

4. The information processing apparatus according to claim 1, wherein
   the determination processing unit performs processing of determining a phase measurement time for each frequency as the parameter determination processing based on the usage status.

5. The information processing apparatus according to claim 1,
   wherein
   the determination processing unit performs processing of determining a frequency range in which phase measurement is performed as the parameter determination processing based on the usage status.

6. The information processing apparatus according to claim 1,
   wherein
   the determination processing unit performs processing of determining a number of antennas to be used for distance measurement as the parameter determination processing based on the usage status.

7. The information processing apparatus according to claim 1,
   wherein
   the determination processing unit uses result information of carrier sense performed for the wireless communication band in a target space as usage status information representing the usage status.

8. The information processing apparatus according to claim 7,
   wherein
   the determination processing unit determines the parameter so that phase measurement in the phase based distance measurement is performed, among a plurality of frequency channels in the wireless communication band, on the frequency channels other than a frequency channel recognized to be in use by the carrier sense.

9. The information processing apparatus according to claim 1,
   wherein
   the determination processing unit uses, as usage status information representing the usage status, information on a number of simultaneous connections of communication devices that perform communication using the wireless communication band.

10. The information processing apparatus according to claim 1,
    wherein
    the determination processing unit uses, as usage status information representing the usage status, information on a number of detected communication errors for communication using the wireless communication band in a target space.

11. The information processing apparatus according to claim 1,
    wherein
    the determination processing unit uses, as usage status information representing the usage status, information obtained on a basis of a measurement value in the phase based distance measurement executed in a past in a target space.

12. The information processing apparatus according to claim 1,

wherein

the determination processing unit uses, as usage status information representing the usage status, information generated on a basis of a result of communication with a communication device that executes phase characteristic measurement communication processing that is communication processing for measuring a phase for each frequency in the phase based distance measurement, the information being generated by another device that is separate from the communication device and is configured to be communicable with the communication device.

13. The information processing apparatus according to claim 1,
   wherein
   the phase based distance measurement is performed by wireless communication of BLE.

14. An information processing method comprising,

   by an information processing apparatus,
   performing, on a basis of a usage status of a wireless communication band, parameter determination processing of determining a parameter of phase based distance measurement using the wireless communication band.

15. A program readable by a computer apparatus, the program causing the computer apparatus to implement a function of performing, on a basis of a usage status of a wireless communication band, parameter determination processing of determining a parameter of phase based distance measurement using the wireless communication band.

EP 4 617 724 A1

# FIG. 1

2 (COMMUNICATION APPARATUS)   2   2

2   2   2

1 (INFORMATION PROCESSING APPARATUS)

# FIG. 2

## FIG. 3

EP 4 617 724 A1

30 (WIRELESS COMMUNICATION MODULE)

*FIG. 4*

# FIG. 5

A

B

# FIG. 6

PHASE θ OF SIGNAL PROPAGATION PATH

1

INFORMATION PROCESSING APPARATUS

2

COMMUNICATION APPARATUS

$\phi_{IR}$

$\phi_{RI}$

PHASE CALCULATION

$\theta$

## FIG. 7

# FIG. 8

# FIG. 9

| COMMUNICATION APPARATUS_B (BASE) | INFORMATION PROCESSING APPARATUS_2 (TERMINAL) | INFORMATION PROCESSING APPARATUS_1 (TERMINAL) | COMMUNICATION APPARATUS_A (BASE) |
|---|---|---|---|
| COMMUNICATION_2B | COMMUNICATION_2B | COMMUNICATION_1A | COMMUNICATION_1A |
| COMMUNICATION_1B | COMMUNICATION_2A | COMMUNICATION_1B | COMMUNICATION_2A |
| | | PHASE CHARACTERISTIC MEASUREMENT_1A | PHASE CHARACTERISTIC MEASUREMENT_1A |
| | PHASE CHARACTERISTIC MEASUREMENT_2A | | PHASE CHARACTERISTIC MEASUREMENT_2A |
| PHASE CHARACTERISTIC MEASUREMENT_1B | | PHASE CHARACTERISTIC MEASUREMENT_1B | |
| PHASE CHARACTERISTIC MEASUREMENT_2B | PHASE CHARACTERISTIC MEASUREMENT_2B | | |

# FIG. 10

```
                                              11
    ┌─────────────────────────────────────┐
    │              CPU                    │
    │                                      │
    │   ┌─────────────────────────┐       │      F1
    │   │    DETERMINATION        │───────┼───
    │   │   PROCESSING UNIT       │       │
    │   └─────────────────────────┘       │
    │                                      │
    └─────────────────────────────────────┘
```

# FIG. 11

```
        ( START )
            │
┌───────────────────────────┐
│ USAGE STATUS INFORMATION  │  S101
│  ACQUISITION PROCESSING   │
└───────────────────────────┘
            │
      ⟨ IS BAND CONGESTED? ⟩────── Yes ──────┐
            │           S102                  │
           No                                 │
            │                                 │
┌───────────────────────┐    ┌───────────────────────────┐
│  EXECUTION CONTROL OF │    │   EXECUTION CONTROL OF    │
│  PHASE CHARACTERISTIC │    │   PHASE CHARACTERISTIC    │
│ MEASUREMENT VALUE AND │    │  MEASUREMENT VALUE AND    │
│  DISTANCE CALCULATION │    │ DISTANCE CALCULATION USING│
│ USING ALL FREQUENCY ch│    │  FREQUENCY ch EXCLUDING   │
│                       │    │     SOME FREQUENCY ch     │
└───────────────────────┘    └───────────────────────────┘
              S103                          S104
            │                                 │
            └──────────────┬──────────────────┘
                           │
                      ( END )
```

# FIG. 12

```
           START

USAGE STATUS INFORMATION     S101
   ACQUISITION PROCESSING

                                    Yes
     IS BAND CONGESTED?
                             S102

            No

 EXECUTION CONTROL OF        EXECUTION CONTROL OF
 PHASE CHARACTERISTIC         PHASE CHARACTERISTIC
   MEASUREMENT AND              MEASUREMENT AND
 DISTANCE CALCULATION         DISTANCE CALCULATION
  IN FIRST SWEEP RANGE         IN FIRST SWEEP RANGE
                           NARROWER THAN FIRST SWEEP RANGE
                      S105                              S106

            END
```

## FIG. 13

ANTENNA SWITCHING SIGNAL

# FIG. 14

```
            START
              │
  ┌───────────────────────┐
  │ USAGE STATUS INFORMATION │  S101
  │  ACQUISITION PROCESSING  │
  └───────────────────────┘
              │
         ╱─────────────╲          Yes
        │ IS BAND CONGESTED? │──────────────┐
         ╲─────────────╱  S102            │
              │ No                          │
  ┌───────────────────────┐   ┌───────────────────────┐
  │ EXECUTION INSTRUCTION OF │   │ EXECUTION INSTRUCTION OF │
  │  PHASE CHARACTERISTIC    │   │  PHASE CHARACTERISTIC    │
  │   MEASUREMENT AND        │   │   MEASUREMENT AND        │
  │ DISTANCE CALCULATION     │   │ DISTANCE CALCULATION     │
  │  USING N ANTENNAS        │   │ USING M (M < N) ANTENNAS │
  └───────────────────────┘   └───────────────────────┘
         S107                            S108
              │                            │
              └──────────┬─────────────────┘
                         │
                       END
```

# FIG. 15

```
                    ┌─────────────┐
                    │    START    │
                    └──────┬──────┘
                           │
         ┌─────────────────────────────────┐
         │  USAGE STATUS INFORMATION       │  S101
         │  ACQUISITION PROCESSING         │
         └─────────────────┬───────────────┘
                           │
                                          Yes
         ╱────────────────────────────╲ ──────────────┐
         ╲   IS BAND CONGESTED?        ╱               │
          ╲──────────────────────────╱  S102          │
                           │                           │
                          No                           │
                           │                           │
    ┌──────────────────────────────┐   ┌──────────────────────────────┐
    │   EXECUTION CONTROL OF        │   │   EXECUTION CONTROL OF        │
    │   PHASE CHARACTERISTIC        │   │   PHASE CHARACTERISTIC        │
    │   MEASUREMENT AND             │   │   MEASUREMENT AND             │
    │   DISTANCE CALCULATION WITH   │   │   DISTANCE CALCULATION WITH   │
    │   PHASE MEASUREMENT TIME      │   │   PHASE MEASUREMENT TIME      │
    │   OF EACH FREQUENCY = X msec  │   │   OF EACH FREQUENCY = Y msec (Y < X) │
    └──────────────────┬───────────┘   └──────────────────┬───────────┘
                   S109                                S110
                       │                                   │
                       └─────────────┬─────────────────────┘
                           ┌─────────┴─────┐
                           │     END       │
                           └───────────────┘
```

# FIG. 16

START

NUMBER OF DISTANCE MEASUREMENTS C ← 0   S201

USAGE STATUS INFORMATION ACQUISITION PROCESSING   S101

IS BAND CONGESTED?   S102 — Yes

No

SET TIMER VALUE T ACCORDING TO EXECUTION INTERVAL OF PHASE CHARACTERISTIC MEASUREMENT = α   S202

SET TIMER VALUE T ACCORDING TO EXECUTION INTERVAL OF PHASE CHARACTERISTIC MEASUREMENT = β (β > α)   S203

EXECUTION CONTROL OF PHASE CHARACTERISTIC MEASUREMENT AND DISTANCE CALCULATION   S204

NUMBER OF DISTANCE MEASUREMENTS C ← C + 1   S205

HAS DISTANCE MEASUREMENT PROCESSING ENDED?   S206 — No

Yes

END

NUMBER OF DISTANCE MEASUREMENTS C ≥ TH_C?   S207 — No

Yes — 1

TIMER VALUE T ≤ 0?   S208 — No

Yes

TIMER SUBTRACTION PROCESSING   S209

TIMER VALUE RESETTING   S210

EP 4 617 724 A1

FIG. 17

A | 2400 | 2408 | 2416 | 2424 | 2432 | 2440 | 2448 | 2456 | 2464 | 2472 | 2480

B | 2400 | 2416 | 2424 | 2432 | 2440 | 2448 | 2456 | 2464 | 2472 | 2480

EP 4 617 724 A1

# FIG. 18

START

↓

EXECUTION CONTROL OF
CARRIER SENSE FOR EACH FREQUENCY    S301

↓

IS THERE FREQUENCY IN USE?    Yes
S302

No

EXECUTION CONTROL OF
PHASE CHARACTERISTIC
MEASUREMENT AND
DISTANCE CALCULATION
USING ALL FREQUENCIES
S303

EXECUTION CONTROL OF
PHASE CHARACTERISTIC
MEASUREMENT AND
DISTANCE CALCULATION
USING UNUSED FREQUENCY
S304

No    HAS DISTANCE MEASUREMENT
PROCESSING ENDED?    S305

Yes

END

EP 4 617 724 A1

## FIG. 19

A | 2400 | 2408 | 2416 | 2424 | 2432 | 2440 | 2448 | 2456 | 2464 | 2472 | 2480

B | 2400 | 2410 | 2416 | 2424 | 2432 | 2440 | 2448 | 2456 | 2464 | 2472 | 2480

# FIG. 20

# FIG. 21

INFORMATION PROCESSING APPARATUS ⟋ 1

USAGE STATUS INFORMATION GENERATION UNIT
(NUMBER OF SIMULTANEOUS CONNECTIONS) ⟋ F11

# FIG. 22

INFORMATION PROCESSING APPARATUS ⟋ 1

USAGE STATUS INFORMATION GENERATION UNIT
(NUMBER OF DETECTED COMMUNICATION ERRORS) ⟋ F11A

# FIG. 23

# FIG. 24

EP 4 617 724 A1

# FIG. 25

INFORMATION PROCESSING APPARATUS ⌐ 1

USAGE STATUS INFORMATION GENERATION UNIT
(PAST MEASUREMENT VALUE) ⌐ F11B

# FIG. 26

SERVER APPARATUS ⌐ 100

USAGE STATUS INFORMATION GENERATION UNIT
(TERMINAL MANAGEMENT INFORMATION ON SERVER) ⌐ F11C

# FIG. 27

〈A〉 GENERATION PROCESSING OF USAGE STATUS INFORMATION
〈B〉 PARAMETER DETERMINATION PROCESSING BASED ON USAGE STATUS INFORMATION
〈C〉 PHASE CHARACTERISTIC MEASUREMENT COMMUNICATION PROCESSING BASED ON DETERMINED PARAMETER
〈D〉 CALCULATION PROCESSING OF DISTANCE BASED ON PHASE θ FOR EACH FREQUENCY OBTAINED BY COMMUNICATION PROCESSING

|  | INFORMATION PROCESSING APPARATUS | COMMUNICATION APPARATUS | SERVER APPARATUS |
|---|---|---|---|
| CONFIGURATION EXAMPLE 1 | 〈A〉〈B〉〈C〉〈D〉 | 〈C〉 | — |
| CONFIGURATION EXAMPLE 2 | 〈A〉〈C〉〈D〉 | 〈B〉〈C〉 | — |
| CONFIGURATION EXAMPLE 3 | 〈A〉〈C〉 | 〈B〉〈C〉〈D〉 | — |
| CONFIGURATION EXAMPLE 4 | 〈C〉〈D〉 | 〈A〉〈B〉〈C〉 | — |
| CONFIGURATION EXAMPLE 5 | 〈B〉〈C〉〈D〉 | 〈A〉〈C〉 | — |
| CONFIGURATION EXAMPLE 6 | 〈B〉〈C〉 | 〈A〉〈C〉〈D〉 | — |
| CONFIGURATION EXAMPLE 7 | 〈C〉 | 〈A〉〈B〉〈C〉〈D〉 | — |
| CONFIGURATION EXAMPLE 8 | 〈B〉〈C〉〈D〉 | 〈C〉 | 〈A〉 |
| CONFIGURATION EXAMPLE 9 | 〈C〉〈D〉 | 〈C〉 | 〈A〉〈B〉 |
| CONFIGURATION EXAMPLE 10 | 〈C〉 | 〈C〉 | 〈A〉〈B〉〈D〉 |
| CONFIGURATION EXAMPLE 11 | 〈C〉 | 〈B〉〈C〉〈D〉 | 〈A〉 |
| CONFIGURATION EXAMPLE 12 | 〈C〉 | 〈C〉〈D〉 | 〈A〉〈B〉 |

## INTERNATIONAL SEARCH REPORT

| International application No. |
| --- |
| **PCT/JP2023/038148** |

| A. | CLASSIFICATION OF SUBJECT MATTER |
| --- | --- |

*G01S 13/84*(2006.01)i; *G01S 5/14*(2006.01)i; *G01S 11/02*(2010.01)i
FI: G01S13/84; G01S5/14; G01S11/02

According to International Patent Classification (IPC) or to both national classification and IPC

| B. | FIELDS SEARCHED |
| --- | --- |

Minimum documentation searched (classification system followed by classification symbols)

G01S 5/00 - G01S 5/14; G01S 7/00 - G01S 7/42; G01S 11/00 - G01S 11/16; G01S 13/00 - G01S 13/95; G01S 19/00 - G01S 19/55; H04B 7/24 - H04B 7/26; H04W 4/00 - H04W 99/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | JP 2018-527509 A (VALEO COMFORT AND DRIVING ASSISTANCE) 20 September 2018 (2018-09-20) paragraphs [0001], [0009]-[0010], [0014], [0024]-[0047], fig. 1-7 | 1-5, 10-11, 13-15 |
| Y | | 7-8 |
| A | | 6, 9, 12 |
| Y | JP 2008-199411 A (OMRON CORP) 28 August 2008 (2008-08-28) paragraphs [0001], [0017], [0059]-[0092], [0106]-[0113], fig. 1-2, 5, 7 | 7-8 |
| A | JP 2006-519980 A (CAMBRIDGE SILICON RADIO LIMITED) 31 August 2006 (2006-08-31) entire text, all drawings | 1-15 |
| A | JP 2019-128341 A (TOSHIBA CORP) 01 August 2019 (2019-08-01) entire text, all drawings | 1-15 |
| A | JP 2000-68895 A (OKI ELECTRIC IND CO LTD) 03 March 2000 (2000-03-03) entire text, all drawings | 1-15 |

[✓] Further documents are listed in the continuation of Box C.    [✓] See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **01 November 2023** | **21 November 2023** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

## INTERNATIONAL SEARCH REPORT

| International application No. |
|---|
| **PCT/JP2023/038148** |

### C.    DOCUMENTS CONSIDERED TO BE RELEVANT

| Category* | Citation of document, with indication, where appropriate, of the relevant passages | Relevant to claim No. |
|---|---|---|
| A | JP 2016-503492 A (QUALCOMM INCORPORATED) 04 February 2016 (2016-02-04) entire text, all drawings | 1-15 |
| A | US 2010/0167662 A1 (KLUGE, Wolfram) 01 July 2010 (2010-07-01) entire text, all drawings | 1-15 |
| A | US 2002/0094786 A1 (BERLINER, Shlomo) 18 July 2002 (2002-07-18) entire text, all drawings | 1-15 |

Form PCT/ISA/210 (second sheet) (January 2015)

## INTERNATIONAL SEARCH REPORT
### Information on patent family members

International application No.

**PCT/JP2023/038148**

| Patent document cited in search report | | | Publication date (day/month/year) | Patent family member(s) | | | Publication date (day/month/year) |
|---|---|---|---|---|---|---|---|
| JP | 2018-527509 | A | 20 September 2018 | US<br>paragraphs [0001], [0012]-<br>[0013], [0026], [0041]-[0078],<br>fig. 1-7<br>WO<br>FR<br>CN | 2018/0246199<br><br><br><br>2017/037133<br>3040498<br>108780591 | A1<br><br><br><br>A1<br>A1<br>A | |
| JP | 2008-199411 | A | 28 August 2008 | US<br>paragraphs [0001], [0015],<br>[0090]-[0117], [0130]-[0137],<br>fig. 1-2, 5, 7<br>EP<br>CN | 2008/0198903<br><br><br><br>1959578<br>101299231 | A1<br><br><br><br>A2<br>A | |
| JP | 2006-519980 | A | 31 August 2006 | US<br>WO<br>CA | 2006/0154611<br>2004/074865<br>2516482 | A1<br>A1<br>A1 | |
| JP | 2019-128341 | A | 01 August 2019 | US<br>EP<br>CN | 2019/0227141<br>3517995<br>110082746 | A1<br>A1<br>A | |
| JP | 2000-68895 | A | 03 March 2000 | (Family: none) | | | |
| JP | 2016-503492 | A | 04 February 2016 | US<br>WO<br>CN<br>KR | 2014/0112375<br>2014/062575<br>104718785<br>10-2015-0076199 | A1<br>A1<br>A<br>A | |
| US | 2010/0167662 | A1 | 01 July 2010 | EP<br>DE<br>CN | 2204669<br>102009060593<br>101782651 | A1<br>A1<br>A | |
| US | 2002/0094786 | A1 | 18 July 2002 | WO | 2002/058267 | A2 | |

Form PCT/ISA/210 (patent family annex) (January 2015)

**REFERENCES CITED IN THE DESCRIPTION**

**Patent documents cited in the description**

- JP 2018124181 A

- JP 2010223593 A